(19) Europäisches Patentamt
European Patent Office
Office européen des brevets

(11) **EP 4 697 713 A1**

(12) **EUROPEAN PATENT APPLICATION**
published in accordance with Art. 153(4) EPC

(43) Date of publication:
**18.02.2026   Bulletin 2026/08**

(21) Application number: **24787983.6**

(22) Date of filing: **07.04.2024**

(51) International Patent Classification (IPC):
**H04N 19/186** *(2014.01)*

(52) Cooperative Patent Classification (CPC):
**H04N 19/186; H04N 19/42**

(86) International application number:
**PCT/CN2024/086304**

(87) International publication number:
**WO 2024/212880 (17.10.2024 Gazette 2024/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:   **12.04.2023   CN 202310390826**

(71) Applicants:
• **Boe Technology Group Co., Ltd.
Beijing 100015 (CN)**

• **Beijing BOE Technology Development Co., Ltd.
Beijing 100176 (CN)**

(72) Inventors:
• **SHU, Long
Beijing 100176 (CN)**
• **ZHANG, Qian
Beijing 100176 (CN)**

(74) Representative: **Isarpatent
Patent- und Rechtsanwälte Partg mbB
Friedrichstraße 31
80801 München (DE)**

(54)   **CODING METHOD, DECODING METHOD, APPARATUS, AND DEVICE**

(57)    A coding method, a decoding method, an apparatus and a device are provided by the present application, which are conducive to improving the applicability of the coding method and the decoding method and improving the compression effect of video coding. The decoding method of an embodiment of the present application includes: acquiring coding information corresponding to a target coding block; determining a target model according to index information of the target model; determining a chroma prediction value of the target coding block according to the target model, values of parameters and a luminance downsampling reconstruction value of the target coding block; and determining a chroma reconstruction value of the target coding block according to the chroma prediction value of the target coding block and a target difference value.

Acquiring coding information corresponding to a target coding block, wherein the coding information at least includes: index information of a target model, values of parameters, a luminance downsampling reconstruction value of the target coding block and a target difference value — S101

Determining the target model according to the index information of the target model — S102

Determining a chroma prediction value of the target coding block according to the target model, the values of the parameters and the luminance downsampling reconstruction value of the target coding block — S103

Determining a chroma reconstruction value of the target coding block according to the chroma prediction value of the target coding block and the target difference value — S104

FIG. 11

**Description**

**CROSS-REFERENCE TO RELATED APPLICATION**

This application claims the priority of the Chinese Patent application filed on April 12th, 2023 before the China National Intellectual Property Administration with the application number of 202310390826.2, and the title of "CODING METHOD, DECODING METHOD, APPARATUS, AND DEVICE", which is incorporated herein in its entirety by reference.

**FIELD**

The present application belongs to the technical field of video coding and decoding and, more particularly, to a coding method, a decoding method, an apparatus and a device.

**BACKGROUND**

In video coding and decoding, since there is a certain correlation between luminance and chroma, in order to remove the redundancy between different components of luminance and chroma, an intra prediction model is provided by versatile video coding (VVC) based on a cross-component linear model (CCLM).

However, since the CCLM assumes a linear relationship between a chroma pixel value and its corresponding luminance pixel value of the same coding unit (CU) and uses a linear model to generate a prediction value of the corresponding chroma pixel from a reconstruction value of the luminance pixel, so that the chroma prediction method based on the CCLM has low applicability to affect the compression effect of video coding.

**SUMMARY**

A coding method, a decoding method, an apparatus and a device are provided by the embodiments of the present application, which are conducive to improving the applicability of a chroma prediction method and improving the compression effect of video coding.

In a first aspect, a decoding method is provided, the decoding method includes:

acquiring coding information corresponding to a target coding block, wherein the coding information at least includes: index information of a target model, values of parameters, a luminance downsampling reconstruction value of the target coding block, and a target difference value;

determining the target model according to the index information of the target model, wherein the target model is constructed according to an activation function and a first model, and the first model is configured to characterize a mapping relationship between a luminance downsampling reconstruction value and a chroma prediction value;

determining a chroma prediction value of the target coding block according to the target model, the values of the parameters, and the luminance downsampling reconstruction value of the target coding block; and

determining a chroma reconstruction value of the target coding block according to the chroma prediction value of the target coding block and the target difference value.

In a second aspect, a coding method is provided, the coding method includes:

constructing a target model according to an activation function and a first model, wherein the first model is configured to characterize a mapping relationship between a luminance downsampling reconstruction value and a chroma prediction value;

determining values of parameters in the target model according to a real chroma value and a luminance downsampling reconstruction value of a target coding block;

determining a chroma prediction value of the target coding block according to the target model, the values of the parameters and the luminance downsampling reconstruction value of the target coding block;

determining a target difference value according to the chroma prediction value of the target coding block and the real chroma value of the target coding block; and

generating coding information corresponding to the target coding block according to index information of the target model, values of variable parameters, the luminance downsampling reconstruction value of the target coding block and the target difference value.

In a third aspect, a decoding apparatus is provided, the decoding apparatus includes:

an information acquisition module configured to acquire coding information corresponding to a target coding block and a luminance downsampling reconstruction value of the target coding block, wherein the coding information at least includes: index information of a target model, values of parameters, the luminance downsampling reconstruction value of the target coding block and a target difference value;

a model determination module configured to determine the target model according to the index information of the target model, wherein the target model is constructed according to an activation function and a first model, and the first model is configured to characterize a mapping relationship between a luminance downsampling reconstruction value and a chroma prediction value;

a chroma prediction module configured to determine a chroma prediction value of the target coding block according to the target model, the values of the parameters, and the luminance downsampling reconstruction value of the target coding block; and

a chroma reconstruction module configured to determine a chroma reconstruction value of the target coding block according to the chroma prediction value of the target coding block and the target difference value.

In a fourth aspect, a coding apparatus is provided, the coding apparatus includes:

a first construction module configured to construct a target model according to an activation function and a first model, wherein the first model is configured to characterize a mapping relationship between a luminance downsampling reconstruction value and a chroma prediction value;

a first processing module configured to determine values of parameters in the target model according to a real chroma value and a luminance downsampling reconstruction value of a target coding block;

a second processing module configured to determine a chroma prediction value of the target coding block according to the target model, the values of the parameters and the luminance downsampling reconstruction value of the target coding block;

a third processing module configured to determine a target difference value according to the chroma prediction value of the target coding block and the real chroma value of the target coding block; and

a first generation module configured to generate coding information corresponding to the target coding block according to index information of the target model, values of variable parameters, the luminance downsampling reconstruction value of the target coding block and the target difference value.

In a fifth aspect, a computing processing device is provided, the computing processing device includes:

a memory storing a computer-readable code; and

one or more processors, wherein when the computer-readable code is executed by the one or more processors, the computing processing device performs the decoding method according to the first aspect or performing the coding method according to the second aspect.

In a sixth aspect, a computer program including a computer-readable code is provided, when the computer-readable code runs on a computing processing device, the computer-readable code causes the computing processing device to perform the decoding method according to the first aspect or performing the coding method according to the second aspect.

In a seventh aspect, a computer-readable medium having stored thereon the computer program according to the sixth aspect is provided.

In an eighth aspect, a decoding device is provided, the decoding device includes a processor and a memory;

wherein the memory stores a program or an instruction executable on the processor, and the program or the instruction, when executed by the processor, implements the steps of the decoding method according to the first aspect.

In a ninth aspect, a coding device is provided, the coding device includes a processor and a memory; wherein the memory stores a program or an instruction executable on the processor, and the program or the instruction, when executed by the processor, implements the steps of the coding method according to the second aspect.

In a tenth aspect, a coding and decoding system is provided, the coding and decoding system includes: a coding device and a decoding device, the decoding device is configured to perform the steps of the decoding method according to the first aspect, and the coding device is configured to perform the steps of the coding method according to the second aspect.

In an eleventh aspect, a readable storage medium is provided, the readable storage medium stores a program or an instruction, the program or the instruction, when executed by a processor, implements the steps of the decoding method according to the first aspect or implements the steps of the coding method according to the second aspect.

In a twelfth aspect, a chip is provided, the chip includes a processor and a communication interface, the communication interface is coupled to the processor, the processor is configured to run a program or an instruction to implement the coding method according to the second aspect or the decoding method according to the first aspect.

In a thirteenth aspect, a computer program or program product is provided, the computer program or program product is stored in a storage medium, the computer program or program product is executed by at least one processor to implement the steps of the decoding method according to the first aspect or implement the steps of the coding method according to the second aspect.

In the embodiments of the present application, the non-linear activation function is introduced into the construction of the target model, so that the target model can have a high chroma prediction accuracy for target coding blocks with a good or poor linear correlation between luminance and chroma, thereby the applicability of the chroma prediction method is improved and the compression effect of video coding is improved.

The above description is only a summary of technical schemes of the present disclosure, which can be implemented according to contents of the specification in order to better understand technical means of the present disclosure; and in order to make above and other objects, features and advantages of the present disclosure more obvious and understandable, detailed description of the present disclosure is particularly provided in the following.

## BRIEF DESCRIPTION OF THE DRAWINGS

In order to more clearly illustrate the technical solutions of the embodiments of the present disclosure or the related art, the drawings that are required to describe the embodiments or the related art may be briefly introduced below. Apparently, the drawings that are described below are some embodiments of the present disclosure, and a person skilled in the art can obtain other drawings according to these figures without paying creative work.

FIG. 1 is a schematic diagram of a luminance sample block in an embodiment of the present application;

FIG. 2 is a schematic diagram of a chroma sample block in an embodiment of the present application;

FIG. 3 is a schematic diagram of a luminance and chroma value distribution in an embodiment of the present application;

FIG. 4 is a schematic diagram of another luminance and chroma value distribution in an embodiment of the present application;

FIG. 5 is a schematic diagram of segmentation regions in a multi-mode linear model in an embodiment of the present application;

FIG. 6 is a schematic diagram of pixel point grouping in an embodiment of the present application;

FIG. 7 is a schematic diagram of a filter in an embodiment of the present application;

FIG. 8 is a schematic diagram of another filter in an embodiment of the present application;

FIG. 9 is a schematic diagram of another filter in an embodiment of the present application;

FIG. 10 is a schematic diagram of another filter in an embodiment of the present application;

FIG. 11 is a flowchart of a decoding method in an embodiment of the present application;

FIG. 12 is a flowchart of a coding method in an embodiment of the present application;

FIG. 13 is a block diagram of a structure of a decoding apparatus in an embodiment of the present application;

FIG. 14 is a block diagram of a structure of a coding apparatus in an embodiment of the present application;

FIG. 15 schematically shows a block diagram of a computing processing device configured to perform a method according to the present disclosure; and

FIG. 16 schematically shows a storage unit configured to hold or carry program code for implementing a method according to the present disclosure.

**DETAILED DESCRIPTION**

In order to make purposes, technical schemes and advantages of embodiments of this disclosure clearer, the technical schemes in the embodiments of this disclosure will be described clearly and completely with reference to the drawings in the embodiments of this disclosure; and it is obvious that the described embodiments are part of the embodiments of this disclosure, but not all of them. On a basis of the embodiments in this disclosure, all other embodiments obtained by the ordinary skilled in the art without paying creative effort are within a protection scope of this disclosure.
The terms "first", "second", etc. used in the specification and claims of the present disclosure are used to distinguish similar objects and are not used to describe a particular order or precedence. It should be understood that the terms thus used are interchangeable where appropriate, so that the embodiments of the present application can be implemented in an order other than those illustrated or described here, and that the objects distinguished by "first", "second", etc., are usually of the same class, and the number of objects is not limited, for example, the first object may be one or at least two. In addition, the "and/or" in the specification and claims refers to at least one of the connected objects, and the character "/" generally means that the related objects are an "or" relationship.
Compared with the previous generation of the video coding and decoding technology standard HEVC (H.265), VVC (H.266) adds the content of CCLM. The CCLM technique may be subdivided into the following seven techniques.

1. CCLM (narrow):

In this technique, it is assumed that there is a linear relationship between a chroma pixel value and its corresponding luminance pixel value of the same coding block (i.e., the coding unit), so the CCLM uses a linear (including curve) model to generate a prediction value of the corresponding chroma pixel according to a reconstruction value of the luminance pixel.
A reconstructed luminance sample is obtained by reconstructing the luminance sample using a 6-tap filter through the following formula:

$$\begin{aligned} Rec'_L(x,y) = &(2 \times Rec_L(2x,2y) + 2 \times Rec_L(2x,2y+1) \\ &+ Rec_L(2x-1,2y) + Rec_L(2x+1,2y) \\ &+ Rec_L(2x-1,2y+1) + Rec_L(2x+1,2y+1) + 4) >> 3 \end{aligned},$$

wherein $\mathrm{Rec}'_L(x,y)$ is a reconstructed luminance sample value (i.e., a luminance downsampling reconstruction value), $Rec_L(x, y)$ is a luminance sample value, $(x, y)$ is a sample coordinate, and $>>$ is a displacement operation.
Then, a chroma sample is predicted using the reconstructed luminance sample:

$$Pred_C(x,y) = \alpha \times Rec'_L(x,y) + \beta,$$

wherein $\mathrm{Rec}'_L(x,y)$ is the reconstructed luminance sample value, $Pred_C(x, y)$ is a predicted chroma sample value, $(x, y)$ is the sample coordinate, and $\alpha$ and $\beta$ are parameters of the linear model. It is derived by calculation according to the following formula:

$$\alpha = \frac{I \times \sum_{i=1}^{I} Rec_C(i) \times Rec'_L(i) - \sum_{i=1}^{I} Rec_C(i) \times \sum_{i=1}^{I} Rec'_L(i)}{I \times \sum_{i=1}^{I} Rec'_L(i) \times Rec'_L(i) - \left(\sum_{i=1}^{I} Rec'_L(i)\right)^2} \, ,$$

$$\beta = \frac{\sum_{i=1}^{I} Rec_C(i) - \alpha \times \sum_{i=1}^{I} Rec_L'(.)}{I}$$

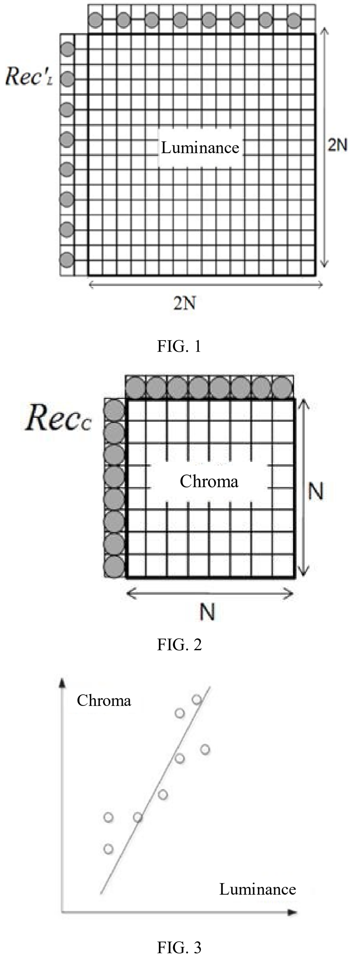

wherein $Rec'_L(i)$ is a luminance downsampling reconstruction value of an i-th adjacent sample, $Rec_C(i)$ is a chroma value of the i-th adjacent sample, and I represents the quantity of adjacent samples. The adjacent samples may be selected from sample blocks indicated by gray dots as shown in FIG. 1 or FIG. 2.

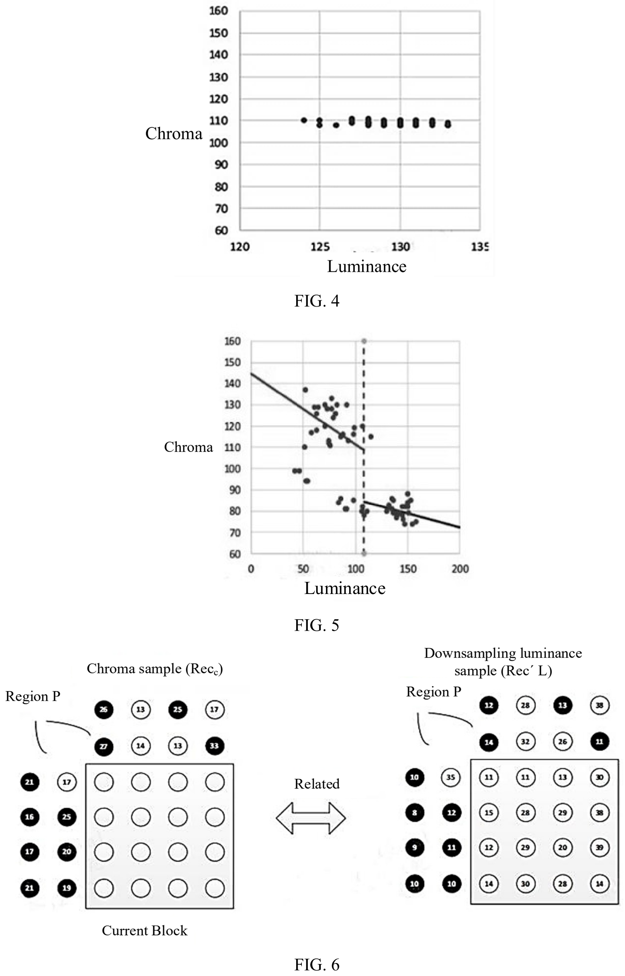

It can be seen that the linear model defined by CCLM can only have a high coverage rate for CUs corresponding to the luminance and chroma value distribution with a strong linear correlation (as shown in FIG. 3 or FIG. 4), and may realize a high-accuracy prediction from the luminance to the chroma.

2. Slope adjustment of CCLM:

An enhanced compression model (ECM) optimizes the traditional CCLM. For the traditional CCLM: chromaVal = a * lumaVal + b, the ECM is obtained by introducing a parameter 'u' into the traditional CCLM for adjusting the slope: chromaVal = a' * lumaVal + b', a' = a + u, b' = b-u * yr, wherein chromaVal is a chroma prediction value, lumaVal is a luminance downsampling reconstruction value, a and b are parameters of the CCLM, yr is a luminance average value, and u is any integer between -4 and 4. It can be seen that the ECM realizes a rotational modification to the linear model around the yr point.

3. A multi-model linear model (MM-CCLM), simply referred to as MMLM:

In order to improve the low model coverage rate in some luminance and chroma value distribution cases, the MM-CCLM adopts a piecewise linear regression method, the luminance and chroma value distribution is divided into n regions, and different regions use different linear model parameters:

$$y = \begin{cases} a_1 x + b_1 & x < t_1 \\ a_2 x + b_2 & t_1 \leq x < t_2 \\ \dots & \\ a_n x + b_n & t_{n-1} \leq x \end{cases} ,$$

wherein y is a chroma prediction value, x is a luminance downsampling reconstruction value, $t_1,..., t_{n-1}$ are segmentation thresholds, and $a_1,..., a_n$ and $b_1,..., b_n$ are linear model parameters.

Since piecewise calculations may lead to increased computational complexity, fewer segments may be advantageous for computational complexity. For a relatively low computational complexity, the MM-CCLM is generally divided into two segments, and a breakpoint (i.e., a threshold) is selected to separate x. As shown in FIG. 5, the segmentation is performed based on the average value of the downsampling luminance samples, and the average value is 108. After the piecewise linear regression, a mean square error (MSE) decreases from 88.44 to 45.69.

As shown in FIG. 6, the region P is two adjacent lines at a left side and an upper side of a current chroma block (or a luminance block after downsampling), and an obtained threshold (i.e., the average value of the luminance downsampling reconstruction values in the region P) is 17. When the luminance downsampling reconstruction value of a pixel point in the region P is greater than the threshold, the pixel point is classified into a group 1 and marked as a white dot. When the luminance downsampling reconstruction value of a pixel point in the region P is less than thresholds, the pixel point is classified into a group 0 and marked as a black dot. Then, within each group, the linear model parameters corresponding to each region are calculated.

It should be noted that in VVC, a parameter (i.e., LM flag) is used for indicating whether the CCLM technique is applied. If the LM flag is equal to 1, it means that the CCLM technique is applied. Then, it is determined whether the MMLM flag indicates the application of the MM-CCLM technique so that the coding end and the decoding end correctly select the model for chroma prediction.

4. Multi sampling filter linear model (MF-CCLM):

The MF-CCLM optimizes a reconstructed luminance value based on the default 4:2:0 chroma downsampling position. In the new generation of the coding and decoding standard (AVC/HEVC), the chroma downsampling position may be self-definable according to the color display effect because of the supplemental VUI advanced syntax support.
According to the position situation, special downsampling filters may be formulated for the luminance downsampling in a targeted manner:
downsampling filter 1 (Filter-North):

$$S_Y'(x,y) = \left(S_Y(2x,2y) + S_Y(2x+1,2y) + 1\right) >> 1 \text{,}$$

downsampling filter 2 (Filter-East):

$$S_Y'(x,y) = \left(S_Y(2x+1,2y) + S_Y(2x+1,2y+1) + 1\right) >> 1 \text{,}$$

downsampling filter 3 (Filter-South):

$$S_Y'(x,y) = \left(S_Y(2x,2y+1) + S_Y(2x+1,2y+1) + 1\right) >> 1,$$

downsampling filter 4 (Filter-West):

$$S_Y'(x,y) = \left(S_Y(2x,2y) + S_Y(2x,2y+1) + 1\right) >> 1,$$

downsampling filter 5 (Filter-Center):

$$S_Y'(x,y) = \left(S_Y(2x,2y) + S_Y(2x+1,2y) + S_Y(2x+1,2y+1) + S_Y(2x+1,2y+1) + 2\right) >> 2$$

,

wherein $S_Y'(x,y)$ is a luminance downsampling reconstruction value, $S_Y(x,y)$ is a luminance reconstruction value, (x, y) is a sample coordinate, Filter-North, Filter-East, Filter-South, Filter-West and Filter-Center are downsampling filters in five different modes, and >> is a displacement operation.
In the MF-CCLM mode, four modes, i.e., MFLM-North, MFLM-East, MFLM-South, and MFLM-Center are added. For example, when MFLM-North is selected, the downsampling filter in Filter-North is used in reconstructing a chroma sample.

5. LM-Angular Prediction (LAP):

The big environment provided by the LAP currently offers two options: either using the CCLM or not using the CCLM (using the traditional angle intra prediction). One of the two options is selected. Based on the idea of multi-hypothesis motion compensation, LAP combines the angle intra prediction with the CCLM, resulting in:

$$P_{syn}(x,y) = \omega P_{LM}(x,y) + (1-\omega)P_{ang}(x,y),$$

wherein $P_{syn}(x,y)$ is a chroma prediction value outputted by the LAP, $P_{LM}(x,y)$ is a chroma prediction value outputted by the CCLM, $P_{ang}(x,y)$ is a chroma prediction value outputted by the traditional angle intra prediction, $\omega$ is a weight value, and (x, y) is the sample coordinate.

6. Convolutional cross-component Model (CCCM):

This is a technique used in the ECM, which uses a 7-tap filter, wherein 5 taps are plus sign-shaped spatial element data, along with a non-linear element P and a base element B:

$$predChromaVal = c0C + c1N + c2S + c3E + c4W + c5P + c6B$$

wherein P = (C*C + midVal) >> bitDepth, bitDepth is a bit depth, midVal is a median value of the bit depth, C represents a luminance sample value at a position corresponding to a current chroma sample, N, S, E and W are adjacent sample values of the current luminance sample, respectively, predChromaVal is a prediction value of the current chroma sample, B is a scalar offset between an input and an output, >> is a displacement operation, and c0, c1, c2, c3, c4, c5, and c6 are filter coefficients.

7. Gradient linear model (GLM)

This is a technique used in the ECM, which replaces a downsampling luminance sample L with a luminance gradient G: $C = \alpha \cdot G + \beta$, wherein C is a chroma prediction value, $G$ is a luminance gradient value, and $\alpha$ and $\beta$ are linear model parameters.

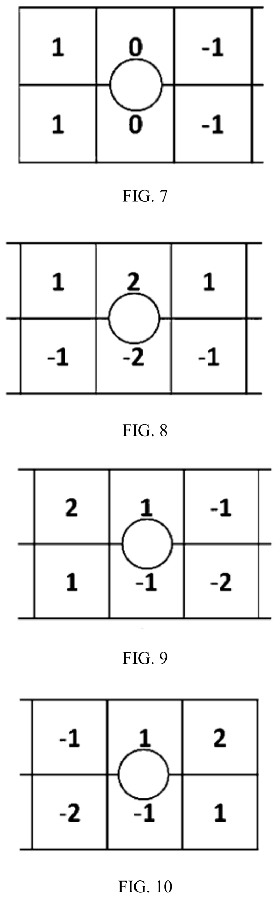

Compared with the CCLM, the GLM does not performs downsampling on the luminance value, but uses the gradient of the luminance sample to derive the linear model. That is, during the parameter derivation, the GLM does not use the luminance sample after downsampling, but uses the gradient G of the luminance sample to derive the linear model, while other designs of the CCLM (such as parameter derivation and prediction sample linear transformation) remain unchanged. The gradient calculation may be implemented by using any one of the filters shown in FIG. 7 to FIG. 10.

Based on the above-mentioned CCLM technique, it can be seen that the CCLM assumes that there is a linear relationship between the chroma pixel value and its corresponding luminance pixel value of the same CU, so the CCLM uses a linear model to generate the prediction value of the corresponding chroma pixel from the reconstruction value of the luminance pixel. However, for the CU with non-linear correlation or poor linear correlation between luminance and chroma, the residual of CCLM prediction is large, so that the compression effect is poor.

In view of the problems existing in the related art, the present application proposes a more widely applicable coding and decoding method based on cross-component general model (CCGM) prediction to expand the applicable range of video coding to achieve a better compression rate.

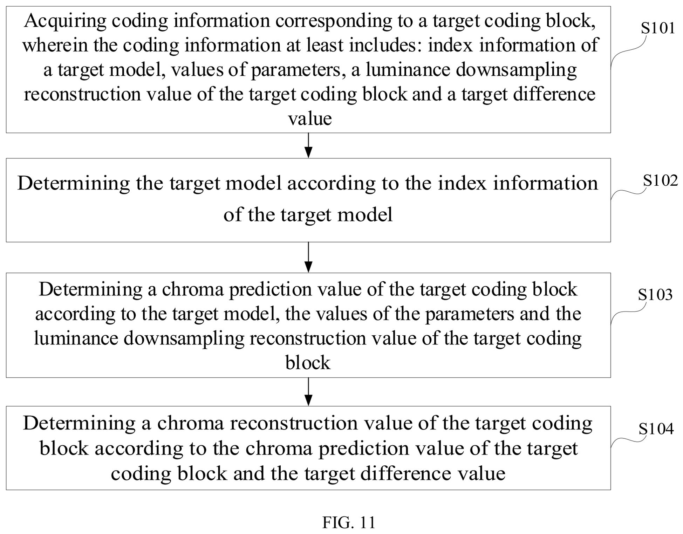

In a first aspect, referring to FIG. 11, it is a flowchart of a decoding method provided by an embodiment of the present application. The method may include the following steps.

At S101, acquiring coding information corresponding to a target coding block, wherein the coding information at least includes: index information of a target model, values of parameters, a luminance downsampling reconstruction value of the target coding block and a target difference value.

In a specific embodiment, a coding end may determine the values of the parameters under the condition that a prediction error of the target model meets a set condition (e.g., the prediction error is less than an error threshold) according to a real chroma value, a luminance downsampling reconstruction value, the prediction error of the target model and a mapping relationship between the parameters of the target model, thereby the chroma prediction accuracy of the target coding block by the target model is ensured.

As a possible embodiment, in order to reduce the amount of calculation, the same number of reference pixel points associated with the target coding block (e.g., in a target coding block or an adjacent target coding block of the target coding block) may be selected according to the quantity of parameters required to determine the numerical values, and the values of the parameters may be determined according to real chroma values and luminance downsampling reconstruction values of the reference pixel points.

At S102, determining the target model according to the index information of the target model.

The target model is constructed according to an activation function and a first model, and the first model is configured to characterize a mapping relationship between a luminance downsampling reconstruction value and a chroma prediction value. The first model may be a chroma prediction model, such as a curve model and a CCLM technique-related linear model. Specifically, the CCLM technique-related linear model can be any of the following: CCLM (narrow), slope adjustment of CCLM, MM-CCLM, MF-CCLM, LAP, CCCM and GLM.

In a specific embodiment, after determining a first model used for performing chroma prediction on pixel points in a current CU block (i.e., a target coding block), a coding end modifies the first model through an activation function. That is, a target model may use a non-linear property of the activation function to process a general correlation (i.e., linear and non-linear) problem between luminance and chroma of a CU block in video intra coding.

For example, activation function terms may be introduced to modify a chroma prediction value determined by the first model. In the case where the introduced activation function terms include multiple items associated with luminance downsampling reconstruction values, the target model may also flexibly switch among different curve models and/or straight line models (i.e., in the case where the activation function sets all of the multiple items associated with the luminance downsampling reconstruction values to zero) through the activation function, so that the target model can achieve a high chroma prediction accuracy for CU blocks with linear correlation and non-linear correlation between luminance and chroma.

At S103, determining a chroma prediction value of the target coding block according to the target model, the values of the parameters and the luminance downsampling reconstruction value of the target coding block.

In a specific embodiment, after the values of the parameters of the target model are determined, luminance downsampling reconstruction values of pixel points in the target coding block may be inputted into the target model with the determined parameter values, and chroma prediction values of the pixel points outputted by the target model may be obtained.

It may be understood that the target model provided in the present application is a cross-component general model and a cross-component non-linear model (CCnLM). By introducing the activation function, the target model can solve the problem of CU chroma prediction in the case of non-linear correlation between luminance and chroma on the basis of ensuring the CU chroma prediction accuracy in the linear correlation between luminance and chroma.

At S104, determining a chroma reconstruction value of the target coding block according to the chroma prediction value of the target coding block and the target difference value.

In a specific embodiment, after determining the target model corresponding to the target coding block and the values of the parameters in the target model, the coding end may determine the chroma prediction value of the target coding block according to the target model, the values of variable parameters and the luminance downsampling reconstruction value of the target coding block, then determine the target difference value according to the chroma prediction value of the target coding block and the real chroma value of the target coding block, and generate the coding information corresponding to the target coding block according to the index information of the target model, the values of the parameters and the target difference value. The luminance downsampling reconstruction value may be obtained by downsampling a video-coded luminance pixel (such as a luminance pixel with a sampling format of YUV420).

After acquiring the coding information corresponding to the target coding block and the luminance downsampling reconstruction value of the target coding block described above, a decoding end may know the target model established by the coding end for the target coding block according to the activation function and the first model according to the index information of the target model. The coding end then restores the chroma prediction value of the target coding block determined by the coding end according to the target model, the values of the parameters and the luminance downsampling reconstruction value of the target coding block, and then determines the chroma reconstruction value of the target coding block according to the chroma prediction value of the target coding block and the target difference value, thereby the decoding of the chroma component information of the target coding block is completed.

It can be understood that since the target model has good applicability to CU blocks with linear correlation and non-linear correlation between luminance and chroma, the coding end may reduce the target difference value (such as residual value) generated for the target coding block through the target model, and the data size of the coding information generated by the coding end is also reduced, thereby the compression rate of video coding is improved.

It can be seen from the above-mentioned steps that the activation function is introduced into the construction of the target model, so that the target model can have a high chroma prediction accuracy for target coding blocks with a good or poor linear correlation between luminance and chroma, thereby the applicability of the chroma prediction method is improved and the compression effect of the video coding is improved.

Embodiment 1

This embodiment describes an example of the construction of the target model.

In the present embodiment, for the difference in the first models used to construct the target model, the following two cases are provided.

Case 1: the first model is configured to characterize a linear mapping (linear correlation) relationship between the luminance downsampling reconstruction value and the chroma prediction value.

In a specific embodiment, the first model may be a CCLM technique-related linear model.

It can be understood that the CCLM technique uses a linear model to generate the prediction value of the corresponding chroma pixel from the reconstruction value of the luminance pixel to reduce the cross redundancy. The prediction value of the chroma pixel is calculated as follows:

$$pred_C(i, j) = \alpha_0 \cdot rec'_L(i, j) + \alpha_1,$$

wherein $pred_C(i,j)$ represents a prediction value of a chroma pixel in the CU at the coordinate (i, j), $rec'_L(i, j)$ represents a reconstruction value after luminance pixel downsampling in the same CU, and linear model parameter values $\alpha_0$ and $\alpha_1$ are determined based on a chroma prediction error value (such as a linear minimum mean square error (LMMSE) value) of a linearly reconstructed current adjacent sampling block.

That the luminance and the chroma have linear correlation in local texture is assumed by the CCLM. However, sometimes the linear model cannot accurately represent the correlation relationship between the luminance and the chroma, so that the applicability of the CCLM is low.

It can be seen from the corresponding relationships between the luminance and RGB as well as the chroma and the RGB as shown below that, at this moment, the linear correlation between the luminance and the chroma is poor, and it is difficult to accurately represent the correlation relationship between the luminance and the chroma through a linear model:

$$Y = 0.299R + 0.587G + 0.114B,$$

$$U = -0.1687R - 0.3313G + 0.5B + 128,$$

$$V = 0.5R - 0.4187G - 0.0813B + 128,$$

wherein Y represents the luminance (i.e., a gray scale value); U and V represent chroma and are configured to describe the image color and saturation; R, G and B represent the colors of the three channels of red, green and blue.

For the above-mentioned case 1, in the present application, a CCLM technique-related model is optimized by introducing an activation function, for example, adding an activation function term with the luminance downsampling reconstruction value as an independent variable to the CCLM technique-related model (such as a third formula characterizing the first model), and/or using the activation function term to modify a parameter item where at least one luminance downsampling reconstruction value is located in the third formula, so that the optimized CCLM technique-related model (such as the target model) can also achieve good approximation fitting to discrete points outside the straight line fitted by the above-mentioned linear model. Therefore, high-accuracy chroma prediction for the CU with a poor linear correlation between the luminance and the chroma can be achieved, so that the application range of the CCLM can be expanded and the compression rate of video coding can be improved.

Case 2: the first model is configured to characterize a non-linear mapping (non-linear correlation) relationship between the luminance downsampling reconstruction value and the chroma prediction value.

In a specific embodiment, the first model may be configured to characterize a non-linear mapping relationship between a luminance downsampling reconstruction value and a chroma prediction value in a curve model related to chroma prediction.

It can be understood that since the curve model can better represent the correlation relationship between the luminance and the chroma, the target model is constructed by combining the activation function and the curve model. For example, at least one parameter item in the third formula characterizing the first model may be modified through the activation function, good approximation fitting to discrete points outside the curve fitted by the curve model can also be achieved, and the chroma prediction accuracy of the target model for the CU with a poor linear correlation between the luminance and the chroma may be further improved.

Exemplarily, in case 2, the target model may be configured to characterize the following two non-linear mapping relationships:

Non-linear mapping relationship 1:

$$pred_C\left(i, j\right) = \alpha_0 \cdot \left(\left(rec'_L\left(i, j\right)\right)^2 + midValue >> bitDepth\right) + \sigma\left(\alpha_1 \cdot rec'_L\left(i, j\right) + \alpha_2 \cdot midValue\right) + \alpha_3 \cdot midValue$$

wherein $\sigma(\ )$ is an activation function for modifying and reducing errors; bitDepth is a bit depth, and midValue is a median value of the bit depth; for example, if the bit depth is 10 bits, the midValue is 512, and if the bit depth is 8 bits, the midValue is 128; $pred_C(i,j)$ is a chroma prediction value of a pixel point at a coordinate (i, j); $rec'_L(i, j)$ is a luminance downsampling reconstruction value of the pixel point at the coordinate (i, j), and $\alpha_0$, $\alpha_1$, $\alpha_2$ and $\alpha_3$ are the values of the parameters; and >>

is a displacement operation.

Non-linear mapping relationship 2:

$$pred_C(i,j) = \sigma\left(\alpha_0 \cdot \left(\left(\left(rec_L'(i,j)\right)^2 + \alpha_1 \cdot midValue\right) >> bitDepth\right) + \sigma\left(\alpha_2 \cdot rec_L'(i,j) + \alpha_3 \cdot midValue\right)\right),$$

wherein $\sigma(\ )$ is an activation function, bitDepth is a bit depth, midValue is a median value of the bit depth, $pred_C(i, j)$ is a chroma prediction value of a pixel point at a coordinate (i, j), $rec_L'(i,j)$ is a luminance downsampling reconstruction value of the pixel point at the coordinate (i, j), $\alpha_0$, $\alpha_1$, $\alpha_2$ and $\alpha_3$ are the values of the parameters, and >> is a displacement operation.

It can be understood that since the activation function is used to modify the quadratic term associated with the luminance downsampling reconstruction value in the non-linear mapping relationship 2, when the activation function is zero, the non-linear mapping relationship 2 will degenerate into a corresponding linear mapping (linear correlation) relationship, thereby flexible switching of the target model between the linear model and the non-linear model is achieved. The above-mentioned median value of the bit depth is mainly used for ensuring that the obtained chroma prediction value does not overflow, while the median value of the bit depth in the activation function is also used for performing a rounding operation on the independent variable in the activation function.

As a possible implementation, $\sigma(\ )$ may be a ReLU function, i.e., $\sigma(x) = \begin{cases} x, if\ x > 0 \\ 0, else, \end{cases}$ , wherein x is an independent variable in the ReLU function.

In the above-mentioned embodiment 1, the activation function is not limited to the ReLU function. In a specific embodiment, the activation function may be any one of: a ReLU function; a Sigmoid function; a Tanh function; a Leaky ReLU function; an ELU function; a PReLU function; a Softmax function; a Swish function; a Maxout function; and a Softplus function.

Embodiment 2

This embodiment describes an example of the parameters in the target model.

In the present embodiment, the values of the variable parameters in the target model may be determined according to the real chroma value and the luminance downsampling reconstruction value of the target coding block, the values of the parameters in the target model and the chroma prediction error of the target model for the target coding block when the chroma prediction error of the target model for the target coding block is minimized.

Taking the target model 1 and the target model 2 characterizing the non-linear mapping relationship 1 and the non-linear mapping relationship 2, respectively, in the above-mentioned embodiment 2 as an example, the values of the variable parameters in the target model 1 and the target model 2 may be determined through the first formula and the second formula, respectively, according to the real chroma values and the luminance downsampling reconstruction values of reference pixel points (such as adjacent pixel points of the target coding block) corresponding to the target coding block.

The first formula is as follows:

$$Loss = \sum\left(y(i,j) - \left(\sigma\left(\left(\alpha_0 x(i,j)^2 + midValue\right) >> bitDepth\right) + \sigma\left(\alpha_1 x(i,j) + \alpha_2 midValue\right) + \alpha_3 midValue\right)\right)^2$$

wherein Loss is a linear minimum mean square error estimation value, $\sigma(\ )$ is the activation function, bitDepth is a bit depth, midValue is a median value of the bit depth, $y(i, j)$ is a real chroma value of a pixel point at a coordinate (i, j), $x(i, j)$ is a luminance downsampling reconstruction value of the pixel point at the coordinate (i, j), $\alpha_0$, $\alpha_1$, $\alpha_2$ and $\alpha_3$ are the values of the parameters, a value range of the coordinate (i, j) is a value range of a coordinate of the reference pixel point corresponding to the target coding block, and >> is the displacement operation.

The second formula is as follows:

$$Loss = \sum\left(y(i,j) - \left(\sigma\left(\alpha_0\left(\left(x(i,j)^2 + \alpha_1 midValue\right) >> bitDepth\right) + \sigma\left(\alpha_2 x(i,j) + \alpha_3 midValue\right)\right)^2\right)\right)$$

, wherein Loss is the linear minimum mean square error estimation value, $\sigma(\ )$ is the activation function, bitDepth is the bit depth, midValue is the median value of the bit depth, $y(i, j)$ is the real chroma value of the pixel point at the coordinate (i, j), $x(i, j)$ is the luminance downsampling reconstruction value of the pixel point at the coordinate (i, j), $\alpha_0$, $\alpha_1$, $\alpha_2$ and $\alpha_3$ are the values of the parameters, the value range of the coordinate (i, j) is the value range of the coordinate of the reference pixel point corresponding to the target coding block, and >> is the displacement operation.

It can be understood that the first formula and the second formula described above are actually based on the linear minimum mean square error (LMMSE) to sum the chroma prediction errors of the reference pixel points for the target model so as to estimate the chroma prediction error of the target model for the target coding block. The chroma prediction error estimation for the target coding block may also be determined by other forms of criterion functions (i.e., the Loss function), which is not limited by the present application.

Since the quantity of the variable parameters of the above-mentioned target model is four, the real chroma values and the luminance downsampling reconstruction values of at least four reference pixel points are required to determine the values of the four variable parameters d, and the minimum size of a VVC video chroma block (i.e., an adjacent coding block configured to select the adjacent pixel point of the target coding block) is 4x4, so that the requirement of the minimum quantity of pixel points required for determining parameters in the target model may be satisfied.

Taking the above-mentioned first formula as an example, parameter values $\alpha_0$, $\alpha_1$, $\alpha_2$, and $\alpha_3$ are derived through the Loss function to obtain:

$$\frac{\partial \text{Loss}}{\partial a_0} = -2(\Sigma(x(i,j)^2 >> bitDepth)(y(i,j) - (((a_0 x(i,j)^2 + \text{mid}Value) >> bitDepth) + \sigma(a_1 x(i,j) + a_2 \text{mid}Value) + a_3 mid Value))$$

$(6.1),$

$$\frac{\partial \text{Loss}}{\partial a_1} = -2(\Sigma x(i,j)(\sigma'(a_1 x(i,j) + a_2 \text{mid}Value)(y(i,j) - (((a_0 x(i,j)^2 + \text{mid}Value) >> bitDepth) + \sigma(a_1 x(i,j) + a_2 \text{mid}Value) + a_3 mid Value))$$

$(6.2),$

$$\frac{\partial \text{Loss}}{\partial a_2} = -2 \text{mid}Value(\Sigma(\sigma'(a_1 x(i,j) + a_2 \text{mid}Value)(y(i,j) - (((a_0 x(i,j)^2 + \text{mid}Value) >> bitDepth) + \sigma(a_1 x(i,j) + a_2 \text{mid}Value) + a_3 mid Value))$$

$(6.3),$

$$\frac{\partial \text{Loss}}{\partial a_3} = -2 \text{mid}Value(\Sigma(y(i,j) - (((a_0 x(i,j)^2 + \text{mid}Value) >> bitDepth) + \sigma(a_1 x(i,j) + a_2 \text{mid}Value) + a_3 mid Value))$$

$(6.4).$

Taking the above-mentioned second formula as an example, the parameter values $\alpha_0$, $\alpha_1$, $\alpha_2$ and $\alpha_3$ are derived through the Loss function to obtain:

$$\frac{\partial \text{Loss}}{\partial a_0} = -2\Sigma(x(i,j)^2 >> bitDepth)\sigma'(a_0(x(i,j)^2 + a_1 \text{mid}Value) >> bitDepth)(y(i,j) - \sigma(a_0((x(i,j)^2 + a_1 \text{mid}Value) >> bitDepth)$$
$$+ \sigma(a_2 x(i,j) + a_3 \text{mid}Value))^2$$

$(7.1),$

$$\frac{\partial \text{Loss}}{\partial a_1} = -\Sigma\sigma'(a_0(x(i,j)^2 + a_1 \text{mid}Value) >> bitDepth)(y(i,j) - \sigma(a_0((x(i,j)^2 + a_1 \text{mid}Value) >> bitDepth)$$
$$+ \sigma(a_2 x(i,j) + a_3 \text{mid}Value))^2)$$

$(7.2),$

$$\frac{\partial \text{Loss}}{\partial a_2} = -2\Sigma x(i,j)\sigma'(a_2 x(i,j) + a_3 \text{mid}Value)(y(i,j) - \sigma(a_0((x(i,j)^2 + a_1 \text{mid}Value) >> bitDepth)$$

$$+\sigma(a_2 x(i,j) + a_3 \text{mid}Value))^2$$

(7.3),

$$\frac{\partial \text{Loss}}{\partial a_3} = -2\Sigma \text{mid}Value\sigma'(a_2 x(i,j) + a_3 \text{mid}Value)(y(i,j) - \sigma(a_0((x(i,j)^2 + a_1 \text{mid}Value) >> bitDepth)$$

$$+\sigma(a_2 x(i,j) + a_3 \text{mid}Value))^2$$

(7.4),

wherein in the above-mentioned formulas 6.1-6.4 and formulas 7.1-7.4, Loss is the linear minimum mean square error

estimation value; $\sigma(x) = \begin{cases} x, if \ x > 0 \\ 0, else, \end{cases}$, $\sigma'(x) = \begin{cases} 1, if \ x > 0 \\ 0, else, \end{cases}$, and x is an independent variable; bitDepth is the bit depth, and midValue is the median value of the bit depth; $y(i,j)$ is the real chroma value of the pixel point at the coordinate (i, j); $x(i,j)$ is the luminance downsampling reconstruction value of the pixel point at the coordinate (i, j); $\alpha_0, \alpha_1, \alpha_2$ and $\alpha_3$ are the values of the parameters; the value range of the coordinate (i, j) is the value range of the coordinate of the reference pixel point corresponding to the target coding block; and >> is the displacement operation.

In the above-mentioned formulas 6.1-6.4 or formulas 7.1-7.4: $\frac{\partial \text{Loss}}{\partial ai} = 0$, (i = 0,1,2,3). The gradient of the Loss function in the direction of any variable parameter $ai$ (such as $\alpha_1$) is taken to estimate the minimum value, and the values of $\alpha_0, \alpha_1, \alpha_2$ and $\alpha_3$ in the first formula or the second formula may be determined by solving simultaneous equations.
In one embodiment, considering that function values of some activation function terms require a plurality of parameters to be jointly determined, initial estimation values of the plurality of parameters may first be determined through the relevant formulas without introducing the activation function terms.
In a particular embodiment, the values (i.e., the initial estimation values) of the parameters in the third formula used for characterizing the first model may first be determined based on the real chroma value and the luminance downsampling reconstruction value of the target coding block. For example, a third mapping relationship among the error estimation value corresponding to the third formula and the values of the parameters in the third formula may be determined according to the real chroma value and the luminance downsampling reconstruction value of the target coding block (for example, the third mapping relationship is determined through a criterion function), and then the values of the parameters in the third formula may be determined according to the third mapping relationship. It can be understood that at this moment, the third formula may be viewed as a target model without the activation function related terms, and the variable parameters of the third formula should at least include: all parameters associated with the activation function related terms.
After obtaining the values of the parameters in the third formula, the final values of the parameters in the target model are determined according to the real chroma value and the luminance downsampling reconstruction value of the target coding block and the values of the parameters in the third formula. For example, the value of the target parameter item in the target model may be determined through the initial estimation values of the parameters, i.e., the value of the parameter item modified by the activation function is determined, and then the values of the parameters in the target model are determined according to the real chroma value and the luminance downsampling reconstruction value of the target coding block and the value of the target parameter item.
As a possible implementation, a second mapping relationship among the error estimation value corresponding to the target model and the values of the parameters in the target model may be determined according to the real chroma value and the luminance downsampling reconstruction value of the target coding block and the value of the target parameter item (for example, the second mapping relationship is determined by taking the value of the target parameter item into a criterion function corresponding to the target model), and then the values of the parameters in the target model may be determined according to the second mapping relationship. Optionally, the error estimation value corresponding to the target model may be a linear minimum mean square error estimation value. At this moment, the above-mentioned second mapping relationship may be determined based on the LMMSE.
Exemplarily, the determination of the parameter values in the target model is described by taking the non-linear mapping relationships 1 and 2 described in the above-mentioned embodiment 1 as an example.
For the non-linear mapping relationship 1, the third mapping relationship among an error estimation value corresponding to a third formula associated with the non-linear mapping relationship 1 and the values of the parameters in the third formula may be determined through a fourth formula according to the real chroma value and the luminance downsampling reconstruction value of the reference pixel point corresponding to the target coding block.

The third formula associated with the non-linear mapping relationship 1 is as follows:

$$pred_C(i, j) = ((\alpha_0 x(i, j))^2 + midValue) \gg bitDepth) + (\alpha_1 x(i, j)) + \alpha_2 midValue) + \alpha_3 midValue,$$

wherein $pred_C(i,j)$ is the chroma prediction value of the pixel point at the coordinate (i, j), bitDepth is the bit depth, midValue is the median value of the bit depth, $x(i, j)$ is the luminance downsampling reconstruction value of the pixel point at the coordinate (i, j), $\alpha_0$, $\alpha_1$, $\alpha_2$ and $\alpha_3$ are the values of the parameters, and >> is the displacement operation.

The fourth formula is as follows:

$$Loss = \Sigma(y(i, j) - (((\alpha_0 x(i, j)^2 + midValue) \gg bitDepth) + (\alpha_1 x(i, j) + \alpha_2 midValue) + \alpha_3 midValue))^2,$$

wherein Loss is the linear minimum mean square error estimation value, bitDepth is the bit depth, midValue is the median value of the bit depth, $y(i, j)$ is the real chroma value of the pixel point at the coordinate (i, j), $x(i, j)$ is the luminance downsampling reconstruction value of the pixel point at the coordinate (i, j), $\alpha_0$, $\alpha_1$, $\alpha_2$ and $\alpha_3$ are the values of the parameters, the value range of the coordinate (i, j) is the value range of the coordinate of the reference pixel point corresponding to the target coding block, and >> is the displacement operation.

For the non-linear mapping relationship 2, the third mapping relationship among an error estimation value corresponding to a third formula associated with the non-linear mapping relationship 2 and the values of the parameters in the third formula may be determined through a fifth formula according to the real chroma value and the luminance downsampling reconstruction value of the reference pixel point corresponding to the target coding block.

The third formula associated with the non-linear mapping relationship 2 is as follows:

$$pred_C(i, j) = ((\alpha_0 x(i, j)^2 + \alpha_1 midValue) \gg bitDepth) + (\alpha_2 \cdot x(i, j) + \alpha_3 \cdot midValue),$$

wherein $pred_C(i,j)$ is the chroma prediction value of the pixel point at the coordinate (i, j), bitDepth is the bit depth, midValue is the median value of the bit depth, $x(i, j)$ is the luminance downsampling reconstruction value of the pixel point at the coordinate (i, j), $\alpha_0$, $\alpha_1$, $\alpha_2$ and $\alpha_3$ are the values of the parameters, and >> is the displacement operation.

The fifth formula is as follows:

$$Loss = \Sigma(y(i, j) - (((\alpha_0 x(i, j)^2 + \alpha_1 midValue) \gg bitDepth) + (\alpha_2 \cdot x(i,j) + \alpha_3 midValue)))^2,$$

wherein Loss is the linear minimum mean square error estimation value, bitDepth is the bit depth, midValue is the median value of the bit depth, $y(i, j)$ is the real chroma value of the pixel point at the coordinate (i, j), $x(i, j)$ is the luminance downsampling reconstruction value of the pixel point at the coordinate (i, j), $\alpha_0$, $\alpha_1$, $\alpha_2$ and $\alpha_3$ are the values of the parameters, the value range of the coordinate (i, j) is the value range of the coordinate of the reference pixel point corresponding to the target coding block, and >> is the displacement operation.

Taking the fourth formula as an example, $\alpha_0$, $\alpha_1$, $\alpha_2$ and $\alpha_3$ are derived based on the Loss function to obtain:

$$\frac{\partial \text{Loss}}{\partial a_0} = -2\Sigma(x(i, j)^2 \gg bitDepth)(y(i, j) - (((a_0 x(i, j)^2 + \text{mid}Value) \gg bitDepth) + (a_1 x(i, j) + a_2 \text{mid}Value) + a_3 \text{mid}Value)) \quad (8.1),$$

$$\frac{\partial \text{Loss}}{\partial a_1} = -2(\Sigma x(i, j)(y(i, j) - (((a_0 x(i, j)^2 + \text{mid}Value) \gg bitDepth) + (a_1 x(i, j) + a_2 \text{mid}Value) + a_3 \text{mid}Value)) \quad (8.2),$$

$$\frac{\partial \text{Loss}}{\partial a_2} = -2\text{mid}Value\Sigma(y(i, j) - (((a_0 x(i, j)^2 + \text{mid}Value) \gg bitDepth) + (a_1 x(i, j) + a_2 \text{mid}Value) + a_3 \text{mid}Value)) \quad (8.3),$$

$$\frac{\partial \text{Loss}}{\partial a_3} = -2\text{mid}Value\Sigma(y(i,j)-(((a_0x(i,j)^2+\text{mid}Value)>>bitDepth)+ \tag{8.4},$$

$$(a_1x(i,j)+a_2\text{mid}Value)+a_3midValue))$$

wherein Loss is the linear minimum mean square error estimation value, bitDepth is the bit depth, midValue is the median value of the bit depth, $y(i,j)$ is the real chroma value of the pixel point at the coordinate (i, j), $x(i,j)$ is the luminance downsampling reconstruction value of the pixel point at the coordinate (i, j), $\alpha_0$, $\alpha_1$, $\alpha_2$ and $\alpha_3$ are the values of the parameters, the value range of the coordinate (i, j) is the value range of the coordinate of the reference pixel point corresponding to the target coding block, and >> is the displacement operation.

In formulas (8.1)-(8.4): $\frac{\partial \text{Loss}}{\partial ai} = 0$ , (i = 0,1,2,3), that is, $\alpha_0$, $\alpha_1$, $\alpha_2$ and $\alpha_3$ may be determined through simultaneous equations.

In the present embodiment, considering that coefficients of the two parameter values $\alpha_2$ and $\alpha_3$ in formulas (8.1)-(8.4) are all the same, and formulas (8.3) and (8.4) are equivalent, the sum of $\alpha_2 midValue + \alpha_3 midValue$ may be regarded as a parameter variable to simplify the calculation. That is, let: $\alpha_{23} = \alpha_2 + \alpha_3$, then $\alpha_{23}$midValue = $\alpha_2 midValue + \alpha_3 midValue$. At this moment, the formulas (8.1)-(8.4) are simplified, and the minimum values are taken to obtain:

$$\Sigma(x(i,j)^2 >> bitDepth)(y(i,j)-(((a_0x(i,j)^2 + \text{mid}Value) >> bitDepth) + a_1x(i,j) + a_{23}\text{mid}Value)) = 0 \tag{9.1},$$

$$\Sigma x(i,j)(y(i,j)-(((a_0x(i,j)^2+\text{mid}Value)>>bitDepth)+a_1x(i,j)+a_{23}\text{mid}Value))=0 \tag{9.2},$$

$$\Sigma(y(i,j)-(((a_0x(i,j)^2+\text{mid}Value)>>bitDepth)+a_1x(i,j)+a_{23}\text{mid}Value))=0 \tag{9.3}.$$

$\alpha_0$, $\alpha_1$ and $\alpha_{23}$ may be obtained through the above-mentioned formulas (9.1)-(9.3). Then, let $\alpha_2 = (\alpha_{23} >>1)$, $\alpha_3 = \alpha_{23} - \alpha_2$, and $\alpha_0$, $\alpha_1$, $\alpha_2$ and $\alpha_3$ (i.e., the initial estimation values) may be obtained. Then, $\alpha_1$ and $\alpha_2$ are taken into formulas (6.1) and (6.4) to approximate $\alpha_0$' and $\alpha_3$', and $\alpha_2$' is obtained through $\alpha_2$' = $\alpha_{23}$' + $\alpha_3$'.

For the non-linear function related terms, such as ReLU function terms $\sigma(a_1x(i,j) + a_2 midValue)$ and $\sigma'(a_1x(i,j) + \alpha_2 midValue)$ , since $\alpha_1$ and $\alpha_2$ has been determined, and the real chroma value and the luminance downsampling reconstruction value of the reference pixel point are known, the value of the ReLU function term determined jointly by $\alpha_1$ and $\alpha_2$ may be known, and then $\sigma(a_1x(i,j) + a_2)$ with the determined value may be taken into formula (6.3) to determine the second mapping relationship among the error estimation value corresponding to the target model and the values of the variable parameters in the target model, thereby the approximated $\alpha_1$' is obtained.

According to the above-mentioned determined $\alpha_0$', $\alpha_1$', $\alpha_2$' and $\alpha_3$' and based on the constructed target model, i.e., taking $\alpha_0$', $\alpha_1$', $\alpha_2$' and $\alpha_3$' into the target model which characterizes the non-linear mapping relationship 1, the chroma prediction of the target coding block in the video image is realized, so that the applicable range of the chroma prediction and the compression rate of coding the chroma block may be improved under a condition that a small amount of computational power is taken.

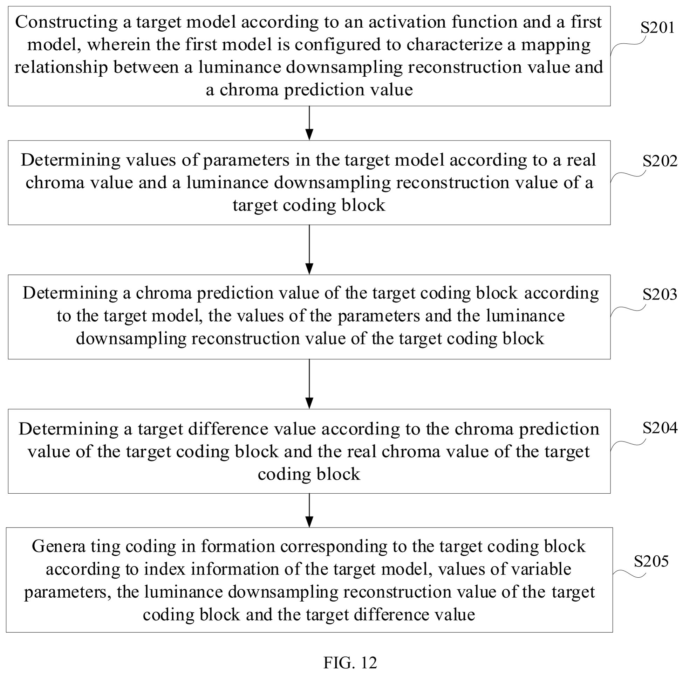

In a second aspect, as shown in FIG. 12, a coding method is provided by an embodiment of the present application. The method includes at least the following steps:

S201: constructing a target model according to an activation function and a first model, wherein the first model is configured to characterize a mapping relationship between a luminance downsampling reconstruction value and a chroma prediction value;

S202: determining values of parameters in the target model according to a real chroma value and a luminance downsampling reconstruction value of a target coding block;

S203: determining a chroma prediction value of the target coding block according to the target model, the values of the parameters and the luminance downsampling reconstruction value of the target coding block;

S204: determining a target difference value according to the chroma prediction value of the target coding block and the real chroma value of the target coding block; and

S205: generating coding information corresponding to the target coding block according to index information of the target model, the values of variable parameters, the luminance downsampling reconstruction value of the target coding block and the target difference value.

As a possible implementation, the first model is configured to characterize a non-linear mapping relationship between the luminance downsampling reconstruction value and the chroma prediction value.

As a possible implementation, the target model is configured to characterize a mapping relationship as follows:

$$pred_C(i,j) = \alpha_0 \cdot \left( \left( rec_L'(i,j) \right)^2 + midValue >> bitDepth \right) + \sigma\left( \alpha_1 \cdot rec_L'(i,j) + \alpha_2 \cdot midValue \right)$$
$$+ \alpha_3 \cdot midValue$$

,

wherein $\sigma()$ is the activation function, bitDepth is a bit depth, midValue is a median value of the bit depth, $pred_C(i,j)$ is a chroma prediction value of a pixel point at a coordinate (i, j), $rec_L'(i,j)$ is a luminance downsampling reconstruction value of the pixel point at the coordinate (i, j), $\alpha_0$, $\alpha_1$, $\alpha_2$ and $\alpha_3$ are the values of the parameters, and >> is a displacement operation.

As a possible implementation, the step of determining the values of the parameters in the target model according to the real chroma value and the luminance downsampling reconstruction value of the target coding block includes:

determining the values of the parameters in the target model through a first formula according to a real chroma value and a luminance downsampling reconstruction value of a reference pixel point corresponding to the target coding block.

The first formula is as follows:

$$Loss = \sum \left( y(i,j) - \left( \sigma\left( \left( \alpha_0 x(i,j)^2 + midValue \right) >> bitDepth \right) + \sigma\left( \alpha_1 x(i,j) + \alpha_2 midValue \right) + \alpha_3 midValue \right) \right)^2,$$

wherein Loss is a linear minimum mean square error estimation value, $\sigma()$ is the activation function, bitDepth is the bit depth, midValue is the median value of the bit depth, $y(i,j)$ is a real chroma value of the pixel point at the coordinate (i, j), $x(i,j)$ is a luminance downsampling reconstruction value of the pixel point at the coordinate (i, j), $\alpha_0$, $\alpha_1$, $\alpha_2$ and $\alpha_3$ are the values of the parameters, a value range of the coordinate (i, j) is a value range of a coordinate of the reference pixel point corresponding to the target coding block, and >> is the displacement operation.

As a possible implementation, the target model is configured to characterize a mapping relationship as follows:

$$pred_C(i,j) = \sigma\left( \alpha_0 \cdot \left( \left( rec_L'(i,j) \right)^2 + \alpha_1 \cdot midValue \right) >> bitDepth \right) + \sigma\left( \alpha_2 \cdot rec_L'(i,j) + \alpha_3 \cdot midValue \right) \right)$$

,

wherein $\sigma()$ is the activation function, bitDepth is the bit depth, midValue is the median value of the bit depth, $pred_C(i,j)$ is the chroma prediction value of the pixel point at the coordinate (i, j), $rec_L'(i,j)$ is the luminance downsampling reconstruction value of the pixel point at the coordinate (i, j), $\alpha_0$, $\alpha_1$, $\alpha_2$ and $\alpha_3$ are the values of the parameters, and >> is the displacement operation.

As a possible implementation, the step of determining the values of the parameters in the target model according to the real chroma value and the luminance downsampling reconstruction value of the target coding block includes: determining the values of the parameters in the target model through a second formula according to a real chroma value and a luminance downsampling reconstruction value of a reference pixel point corresponding to the target coding block.

The second formula is as follows:

$$Loss = \sum \left( y(i,j) - \left( \sigma\left( \alpha_0 \left( \left( x(i,j)^2 + \alpha_1 midValue \right) >> bitDepth \right) + \sigma\left( \alpha_2 x(i,j) + \alpha_3 midValue \right) \right)^2 \right) \right),$$

wherein Loss is the linear minimum mean square error estimation value, $\sigma()$ is the activation function, bitDepth is the bit depth, midValue is the median value of the bit depth, $y(i,j)$ is the real chroma value of the pixel point at the coordinate (i, j), $x(i,j)$ is the luminance downsampling reconstruction value of the pixel point at the coordinate (i, j), $\alpha_0$, $\alpha_1$, $\alpha_2$ and $\alpha_3$ are the values of the parameters, the value range of the coordinate (i, j) is the value range of the coordinate of the reference pixel point corresponding to the target coding block, and >> is the displacement operation.

As a possible implementation, the first model is characterized through a third formula; and the step of constructing the target model according to the activation function and the first model includes:

modifying at least one parameter item in the third formula through the activation function to obtain the target model.

As a possible implementation, the step of determining the values of the parameters in the target model according to the real chroma value and the luminance downsampling reconstruction value of the target coding block includes:

determining values of parameters in the third formula according to the real chroma value and the luminance downsampling reconstruction value of the target coding block; and

determining the values of the parameters in the target model according to the real chroma value and the luminance downsampling reconstruction value of the target coding block and the values of the parameters in the third formula.

As a possible implementation, the step of determining the values of the parameters in the target model according to the real chroma value and the luminance downsampling reconstruction value of the target coding block and the values of the parameters in the third formula includes:

determining a value of a target parameter item in the target model through the values of the parameters in the third formula, wherein the target parameter item is a parameter item modified through the activation function; and

determining the values of the parameters in the target model according to the real chroma value and the luminance downsampling reconstruction value of the target coding block and the value of the target parameter item in the target model.

As a possible implementation, the step of determining the values of the parameters in the target model according to the real chroma value and the luminance downsampling reconstruction value of the target coding block and the value of the target parameter item in the target model includes:

determining a second mapping relationship among an error estimation value corresponding to the target model and the values of the parameters in the target model according to the real chroma value and the luminance downsampling reconstruction value of the target coding block and the value of the target parameter item in the target model; and

determining the values of the parameters in the target model according to the second mapping relationship.

As a possible implementation, the error estimation value corresponding to the target model is a linear minimum mean square error estimation value.

As a possible implementation, the step of determining the values of the parameters in the third formula according to the real chroma value and the luminance downsampling reconstruction value of the target coding block includes:

determining a third mapping relationship among an error estimation value corresponding to the third formula and the values of the parameters in the third formula according to the real chroma value and the luminance downsampling reconstruction value of the target coding block; and

determining the values of the parameters in the third formula according to the third mapping relationship.

As a possible implementation, the step of determining the third mapping relationship among the error estimation value corresponding to the third formula and the values of the parameters in the third formula according to the real chroma value and the luminance downsampling reconstruction value of the target coding block includes:

determining the third mapping relationship among the error estimation value corresponding to the third formula and the values of the parameters in the third formula through a fourth formula according to a real chroma value and a luminance downsampling reconstruction value of a reference pixel point corresponding to the target coding block.

The third formula is as follows:

$$pred_C(i, j) = (\alpha_0 x(i, j))^2 + midValue) \gg bitDepth) + (\alpha_1 x(i, j)) + \alpha_2 midValue) + \alpha_3 midValue,$$

wherein $pred_C(i, j)$ is the chroma prediction value of the pixel point at the coordinate (i, j), bitDepth is the bit depth, midValue is the median value of the bit depth, $x(i, j)$ is the luminance downsampling reconstruction value of the pixel point at the coordinate (i, j), $\alpha_0$, $\alpha_1$, $\alpha_2$ and $\alpha_3$ are the values of the parameters, and >> is the displacement operation.

The fourth formula is as follows:

$$Loss = \Sigma(y(i, j) - (((\alpha_0 x(i, j)^2 + midValue) \gg bitDepth) + (\alpha_1 x(i, j) + \alpha_2 midValue) + \alpha_3 midValue))^2,$$

wherein Loss is the linear minimum mean square error estimation value, bitDepth is the bit depth, midValue is the median value of the bit depth, $y(i, j)$ is the real chroma value of the pixel point at the coordinate (i, j), $x(i, j)$ is the luminance downsampling reconstruction value of the pixel point at the coordinate (i, j), $\alpha_0$, $\alpha_1$, $\alpha_2$ and $\alpha_3$ are the values of the parameters, the value range of the coordinate (i, j) is the value range of the coordinate of the reference pixel point corresponding to the target coding block, and >> is the displacement operation.

As a possible implementation, the step of determining the third mapping relationship among the error estimation value corresponding to the third formula and the values of the parameters in the third formula according to the real chroma value and the luminance downsampling reconstruction value of the target coding block includes:

determining the third mapping relationship among the error estimation value corresponding to the third formula and the values of the parameters in the third formula through a fifth formula according to a real chroma value and a luminance downsampling reconstruction value of a reference pixel point corresponding to the target coding block.

The third formula is as follows:

$$pred_C(i, j) = ((\alpha_0 x(i, j)^2 + \alpha_1 midValue) \gg bitDepth) + (\alpha_2 \cdot x(i, j) + \alpha_3 \cdot midValue),$$

wherein $pred_C(i, j)$ is the chroma prediction value of the pixel point at the coordinate (i, j), bitDepth is the bit depth, midValue is the median value of the bit depth, $x(i, j)$ is the luminance downsampling reconstruction value of the pixel point at the coordinate (i, j), $\alpha_0$, $\alpha_1$, $\alpha_2$ and $\alpha_3$ are the values of the parameters, and >> is the displacement operation.

The fifth formula is as follows:

$$Loss = \Sigma(y(i, j) - (((\alpha_0 x(i, j)^2 + \alpha_1 midValue) >> bitDepth) + (\alpha_2 \cdot x(i, j) + \alpha_3 midValue)))^2,$$

wherein Loss is the linear minimum mean square error estimation value, bitDepth is the bit depth, midValue is the median value of the bit depth, $y(i, j)$ is the real chroma value of the pixel point at the coordinate (i, j), $x(i, j)$ is the luminance downsampling reconstruction value of the pixel point at the coordinate (i, j), $\alpha_0$, $\alpha_1$, $\alpha_2$ and $\alpha_3$ are the values of the parameters, the value range of the coordinate (i, j) is the value range of the coordinate of the reference pixel point corresponding to the target coding block, and >> is the displacement operation.

As a possible implementation, the activation function is any one of:

a ReLU function;

a Sigmoid function;

a Tanh function;

a Leaky ReLU function;

an ELU function;

a PReLU function;

a Softmax function;

a Swish function;

a Maxout function; and

a Softplus function.

It can be seen from the above-mentioned steps that the activation function is introduced into the construction of the target model, so that the target model can have a high chroma prediction accuracy for target coding blocks with a good or poor linear correlation between the luminance and the chroma, thereby the applicability of the chroma prediction method is improved and the compression effect of the video coding is improved.

It can be understood that execution subjects of the coding method and the decoding method provided by the embodiments of the present application may be a coding apparatus and a decoding apparatus. In the embodiments of the present application, the coding apparatus and the decoding apparatus provided by the embodiments of the present application will be described by taking an example in which the coding apparatus and the decoding apparatus perform the coding method and the decoding method, respectively.

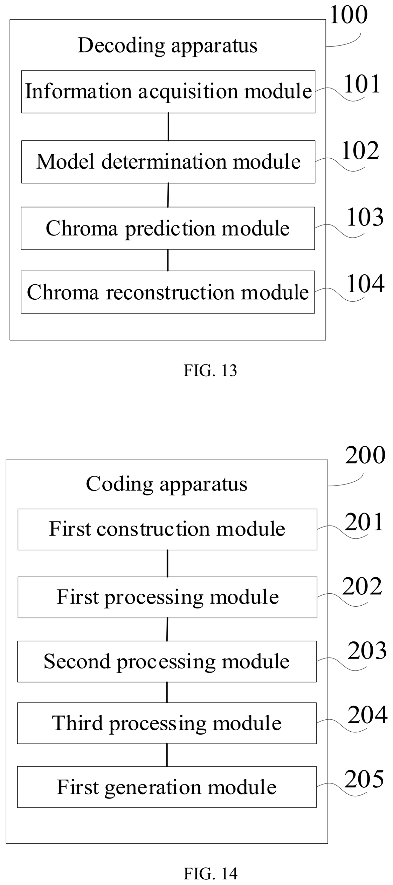

In a third aspect, a decoding apparatus is provided by an embodiment of the present application. As shown in FIG. 13, the decoding apparatus 100 includes:

an information acquisition module 101 configured to acquire coding information corresponding to a target coding block and a luminance downsampling reconstruction value of the target coding block, wherein the coding information at least includes: index information of a target model, values of parameters, the luminance downsampling reconstruction value of the target coding block and a target difference value;

a model determination module 102 configured to determine the target model according to the index information of the target model, wherein the target model is constructed according to an activation function and a first model, and the first model is configured to characterize a mapping relationship between a luminance downsampling reconstruction value and a chroma prediction value;

a chroma prediction module 103 configured to determine a chroma prediction value of the target coding block according to the target model, the values of the parameters and the luminance downsampling reconstruction value of the target coding block; and

a chroma reconstruction module 104 configured to determine a chroma reconstruction value of the target coding block according to the chroma prediction value of the target coding block and the target difference value.

Optionally, the first model is configured to characterize a non-linear mapping relationship between the luminance downsampling reconstruction value and the chroma prediction value.

Optionally, the target model is configured to characterize a mapping relationship as follows:

$$pred_C(i,j) = \alpha_0 \cdot \left( \left( rec_L'(i,j) \right)^2 + midValue >> bitDepth \right) + \sigma\left( \alpha_1 \cdot rec_L'(i,j) + \alpha_2 \cdot midValue \right) + \alpha_3 \cdot midValue \quad,$$

wherein $\sigma()$ is the activation function, bitDepth is a bit depth, midValue is a median value of the bit depth, $pred_C(i, j)$ is a chroma prediction value of a pixel point at a coordinate (i, j), $rec_L'(i,j)$ is a luminance downsampling reconstruction value of the pixel point at the coordinate (i, j), $\alpha_0, \alpha_1, \alpha_2$ and $\alpha_3$ are the values of the parameters, and >> is a displacement operation.

Optionally, the values of the parameters in the target model are determined through a first formula according to a real chroma value and a luminance downsampling reconstruction value of a reference pixel point corresponding to the target coding block.

The first formula is as follows:

$$Loss = \sum \left( y(i,j) - \left( \sigma\left( \left( \alpha_0 x(i,j)^2 + midValue \right) >> bitDepth \right) + \sigma\left( \alpha_1 x(i,j) + \alpha_2 midValue \right) + \alpha_3 midValue \right) \right)^2 ,$$

wherein Loss is a linear minimum mean square error estimation value, $\sigma()$ is the activation function, bitDepth is the bit depth, midValue is the median value of the bit depth, $y(i,j)$ is a real chroma value of the pixel point at the coordinate (i, j), $x(i,j)$ is a luminance downsampling reconstruction value of the pixel point at the coordinate (i, j), $\alpha_0, \alpha_1, \alpha_2$ and $\alpha_3$ are the values of the parameters, a value range of the coordinate (i, j) is a value range of a coordinate of the reference pixel point corresponding to the target coding block, and >> is the displacement operation.

Optionally, the target model is configured to characterize a mapping relationship as follows:

$$pred_C(i,j) = \sigma\left( \alpha_0 \cdot \left( \left( rec_L'(i,j) \right)^2 + \alpha_1 \cdot midValue \right) >> bitDepth \right) + \sigma\left( \alpha_2 \cdot rec_L'(i,j) + \alpha_3 \cdot midValue \right)$$

wherein $\sigma()$ is the activation function, bitDepth is the bit depth, midValue is the median value of the bit depth, $pred_C(i,j)$ is the chroma prediction value of the pixel point at the coordinate (i, j), $rec_L'(i,j)$ is the luminance downsampling reconstruction value of the pixel point at the coordinate (i, j), $\alpha_0, \alpha_1, \alpha_2$ and $\alpha_3$ are the values of the parameters, and >> is the displacement operation.

Optionally, the values of the parameters in the target model are determined through a second formula according to the real chroma value and the luminance downsampling reconstruction value of the reference pixel point corresponding to the target coding block.

The second formula is as follows:

$$Loss = \sum \left( y(i,j) - \left( \sigma\left( \alpha_0\left( \left( x(i,j)^2 + \alpha_1 midValue \right) \gg bitDepth \right) + \sigma\left( \alpha_2 x(i,j) + \alpha_3 midValue \right) \right)^2 \right) \right),$$

wherein Loss is the linear minimum mean square error estimation value, $\sigma(\ )$ is the activation function, bitDepth is the bit depth, midValue is the median value of the bit depth, $y(i,j)$ is the real chroma value of the pixel point at the coordinate (i, j), $x(i,j)$ is the luminance downsampling reconstruction value of the pixel point at the coordinate (i, j), $\alpha_0$, $\alpha_1$, $\alpha_2$ and $\alpha_3$ are the values of the parameters, the value range of the coordinate (i, j) is the value range of the coordinate of the reference pixel point corresponding to the target coding block, and $\gg$ is the displacement operation.

Optionally, the first model is characterized by a third formula; the target model is obtained by modifying at least one parameter item in the third formula by the activation function.

Optionally, the values of the parameters in the target model are determined according to the real chroma value and the luminance downsampling reconstruction value of the target coding block and the values of the parameters in the third formula, and the values of the parameters in the third formula are determined according to the real chroma value and the luminance downsampling reconstruction value of the target coding block.

Optionally, the values of the parameters in the target model are determined according to the real chroma value and the luminance downsampling reconstruction value of the target coding block and a value of a target parameter item in the target model. The value of the target parameter item in the target model is determined through the values of the parameters in the third formula, and the target parameter item is a parameter item modified through the activation function.

Optionally, the values of the parameters in the target model are determined according to a second mapping relationship. The second mapping relationship is a mapping relationship among an error estimation value corresponding to the target model and the values of the parameters in the target model determined according to the real chroma value and the luminance downsampling reconstruction value of the target coding block and the value of the target parameter item in the target model.

Optionally, the error estimation value corresponding to the target model is a linear minimum mean square error estimation value.

Optionally, the values of the parameters in the third formula are determined according to a third mapping relationship. The third mapping relationship is a mapping relationship among an error estimation value corresponding to the third formula and the values of the parameters in the third formula determined according to the real chroma value and the luminance downsampling reconstruction value of the target coding block.

Optionally, the third mapping relationship is determined through a fourth formula according to the real chroma value and the luminance downsampling reconstruction value of the reference pixel point corresponding to the target coding block.

The third formula is as follows:

$pred_C(i, j) = (\alpha_0 x(i, j))^2 + midValue) \gg bitDepth) + (\alpha_1 x(i, j)) + \alpha_2 midValue) + \alpha_3 midValue,$

wherein $pred_C(i,j)$ is the chroma prediction value of the pixel point at the coordinate (i, j), bitDepth is the bit depth, midValue is the median value of the bit depth, $x(i, j)$ is the luminance downsampling reconstruction value of the pixel point at the coordinate (i, j), $\alpha_0$, $\alpha_1$, $\alpha_2$ and $\alpha_3$ are the values of the parameters, and $\gg$ is the displacement operation.

The fourth formula is as follows:

$Loss = \Sigma(y(i, j) - (((\alpha_0 x(i, j)^2 + midValue) \gg bitDepth) + (\alpha_1 x(i, j) + \alpha_2 midValue) + \alpha_3 midValue))^2,$

wherein Loss is the linear minimum mean square error estimation value, bitDepth is the bit depth, midValue is the median value of the bit depth, $y(i, j)$ is the real chroma value of the pixel point at the coordinate (i, j), $x(i, j)$ is the luminance downsampling reconstruction value of the pixel point at the coordinate (i, j), $\alpha_0$, $\alpha_1$, $\alpha_2$ and $\alpha_3$ are the values of the parameters, the value range of the coordinate (i, j) is the value range of the coordinate of the reference pixel point corresponding to the target coding block, and $\gg$ is the displacement operation.

Optionally, the third mapping relationship is determined through a fifth formula according to the real chroma value and the luminance downsampling reconstruction value of the reference pixel point corresponding to the target coding block.

The third formula is as follows:

$$pred_C(i, j) = ((\alpha_0 x(i, j)^2 + \alpha_1 midValue) \gg bitDepth) + (\alpha_2 \cdot x(i, j) + \alpha_3 \cdot midValue),$$

wherein $pred_C(i, j)$ is the chroma prediction value of the pixel point at the coordinate (i, j), bitDepth is the bit depth, midValue is the median value of the bit depth, $x(i, j)$ is the luminance downsampling reconstruction value of the pixel point at the coordinate (i, j), $\alpha_0$, $\alpha_1$, $\alpha_2$ and $\alpha_3$ are the values of the parameters, and >> is the displacement operation.

The fifth formula is as follows:

$$Loss = \Sigma(y(i, j) - (((\alpha_0 x(i, j)^2 + \alpha_1 midValue) \gg bitDepth) + (\alpha_2 \cdot x(i, j) + \alpha_3 midValue)))^2,$$

wherein Loss is the linear minimum mean square error estimation value, bitDepth is the bit depth, midValue is the median value of the bit depth, $y(i, j)$ is the real chroma value of the pixel point at the coordinate (i, j), $x(i, j)$ is the luminance downsampling reconstruction value of the pixel point at the coordinate (i, j), $\alpha_0$, $\alpha_1$, $\alpha_2$ and $\alpha_3$ are the values of the parameters, the value range of the coordinate (i, j) is the value range of the coordinate of the reference pixel point corresponding to the target coding block, and >> is the displacement operation.

Optionally, the activation function is any one of:

a ReLU function;

a Sigmoid function;

a Tanh function;

a Leaky ReLU function;

an ELU function;

a PReLU function;

a Softmax function;

a Swish function;

a Maxout function; and

a Softplus function.

The decoding apparatus provided by the embodiment of the present application can implement various processes implemented by the decoding method embodiment described in the first aspect and achieve the same technical effect. In order to avoid repetition, the description thereof will not be repeated here.

In a fourth aspect, a coding apparatus is provided by an embodiment of the present application. As shown in FIG. 14, the coding apparatus 200 includes:

a first construction module 201 configured to construct a target model according to an activation function and a first model, wherein the first model is configured to characterize a mapping relationship between a luminance downsampling reconstruction value and a chroma prediction value;
a first processing module 202 configured to determine values of parameters in the target model according to a real chroma value and a luminance downsampling reconstruction value of a target coding block;
a second processing module 203 configured to determine a chroma prediction value of the target coding block according to the target model, the values of the parameters and the luminance downsampling reconstruction value of the target coding block;
a third processing module 204 configured to determine a target difference value according to the chroma prediction value of the target coding block and the real chroma value of the target coding block; and
a first generation module 205 configured to generate coding information corresponding to the target coding block according to index information of the target model, the values of variable parameters, the luminance downsampling reconstruction value of the target coding block and the target difference value.

Optionally, the first model is configured to characterize a non-linear mapping relationship between the luminance downsampling reconstruction value and the chroma prediction value.

Optionally, the target model is configured to characterize a mapping relationship as follows:

$$pred_C(i,j) = \alpha_0 \cdot \left( \left( rec_L'(i,j) \right)^2 + midValue >> bitDepth \right) + \sigma \left( \alpha_1 \cdot rec_L'(i,j) + \alpha_2 \cdot midValue \right) + \alpha_3 \cdot midValue$$

wherein $\sigma(\ )$ is the activation function, bitDepth is a bit depth, midValue is a median value of the bit depth, $pred_C(i,j)$ is a chroma prediction value of a pixel point at a coordinate (i, j), $rec_L'(i,j)$ is a luminance downsampling reconstruction value of the pixel point at the coordinate (i, j), $\alpha_0, \alpha_1, \alpha_2$ and $\alpha_3$ are the values of the parameters, and >> is a displacement operation.

Optionally, the first processing module 202 includes:

a first processing sub-module configured to determine the values of the parameters in the target model through a first formula according to a real chroma value and a luminance downsampling reconstruction value of a reference pixel point corresponding to the target coding block.

The first formula is as follows:

$$Loss = \sum \left( y(i,j) - \left( \sigma \left( \left( \alpha_0 x(i,j)^2 + midValue \right) >> bitDepth \right) + \sigma \left( \alpha_1 x(i,j) + \alpha_2 midValue \right) + \alpha_3 midValue \right) \right)^2,$$

wherein Loss is a linear minimum mean square error estimation value, $\sigma(\ )$ is the activation function, bitDepth is the bit depth, midValue is the median value of the bit depth, $y(i,j)$ is a real chroma value of the pixel point at the coordinate (i, j), $x(i,j)$ is a luminance downsampling reconstruction value of the pixel point at the coordinate (i, j), $\alpha_0, \alpha_1, \alpha_2$ and $\alpha_3$ are the values of the parameters, a value range of the coordinate (i, j) is a value range of a coordinate of the reference pixel point corresponding to the target coding block, and >> is the displacement operation.

Optionally, the target model is configured to characterize a mapping relationship as follows:

$$pred_C(i,j) = \sigma \left( \alpha_0 \cdot \left( \left( \left( rec_L'(i,j) \right)^2 + \alpha_1 \cdot midValue \right) >> bitDepth \right) + \sigma \left( \alpha_2 \cdot rec_L'(i,j) + \alpha_3 \cdot midValue \right) \right)$$

wherein $\sigma(\ )$ is the activation function, bitDepth is the bit depth, midValue is the median value of the bit depth, $pred_C(i,j)$ is the chroma prediction value of the pixel point at the coordinate (i, j), $rec_L'(i,j)$ is the luminance downsampling reconstruction value of the pixel point at the coordinate (i, j), $\alpha_0, \alpha_1, \alpha_2$ and $\alpha_3$ are the values of the parameters, and >> is the displacement operation.

Optionally, the first processing module 202 includes:

a second processing sub-module configured to determine the values of the parameters in the target model through a second formula according to the real chroma value and the luminance downsampling reconstruction value of the reference pixel point corresponding to the target coding block.

The second formula is as follows:

$$Loss = \sum \left( y(i,j) - \left( \sigma \left( \alpha_0 \left( \left( x(i,j)^2 + \alpha_1 midValue \right) >> bitDepth \right) + \sigma \left( \alpha_2 x(i,j) + \alpha_3 midValue \right) \right)^2 \right) \right),$$

wherein Loss is the linear minimum mean square error estimation value, $\sigma(\ )$ is the activation function, bitDepth is the bit depth, midValue is the median value of the bit depth, $y(i,j)$ is the real chroma value of the pixel point at the coordinate (i, j), $x(i,j)$ is the luminance downsampling reconstruction value of the pixel point at the coordinate (i, j), $\alpha_0, \alpha_1, \alpha_2$ and $\alpha_3$ are the values of the parameters, the value range of the coordinate (i, j) is the value range of the coordinate of the reference pixel point corresponding to the target coding block, and >> is the displacement operation.

Optionally, the first model is characterized through a third formula. The first construction module 201 includes:

a first construction sub-module configured to modify at least one parameter item in the third formula through the activation function to obtain the target model.

Optionally, the first processing module 202 includes:

a third processing sub-module configured to determine values of parameters in the third formula according to the real chroma value and the luminance downsampling reconstruction value of the target coding block; and

a fourth processing sub-module configured to determine the values of the parameters in the target model according to the real chroma value and the luminance downsampling reconstruction value of the target coding block and the values of the parameters in the third formula.

Optionally, the fourth processing sub-module includes:

a fifth processing sub-module configured to determine a value of a target parameter item in the target model through the values of the parameters in the third formula, wherein the target parameter item is a parameter item modified through the activation function; and

a sixth processing sub-module configured to determine the values of the parameters in the target model according to the real chroma value and the luminance downsampling reconstruction value of the target coding block and the value of the target parameter item in the target model.

Optionally, the sixth processing sub-module includes:

a seventh processing sub-module configured to determine a second mapping relationship among an error estimation value corresponding to the target model and the values of the parameters in the target model according to the real chroma value and the luminance downsampling reconstruction value of the target coding block and the value of the target parameter item in the target model; and

an eighth processing sub-module configured to determine the values of the parameters in the target model according to the second mapping relationship.

Optionally, the error estimation value corresponding to the target model is a linear minimum mean square error estimation value.

Optionally, the third processing sub-module includes:

a ninth processing sub-module configured to determine a third mapping relationship among an error estimation value corresponding to the third formula and the values of the parameters in the third formula according to the real chroma value and the luminance downsampling reconstruction value of the target coding block; and

a tenth processing sub-module configured to determine the values of the parameters in the third formula according to the third mapping relationship.

Optionally, the ninth processing sub-module includes:
an eleventh processing sub-module configured to determine the third mapping relationship among the error estimation value corresponding to the third formula and the values of the parameters in the third formula through a fourth formula according to the real chroma value and the luminance downsampling reconstruction value of the reference pixel point corresponding to the target coding block.

The third formula is as follows:

$$pred_C(i, j) = (\alpha_0 x(i, j))^2 + midValue) \gg bitDepth) + (\alpha_1 x(i, j)) + \alpha_2 midValue) + \alpha_3 midValue,$$

wherein $pred_C(i, j)$ is the chroma prediction value of the pixel point at the coordinate (i, j), bitDepth is the bit depth, midValue is the median value of the bit depth, $x(i, j)$ is the luminance downsampling reconstruction value of the pixel point at the coordinate (i, j), $\alpha_0$, $\alpha_1$, $\alpha_2$ and $\alpha_3$ are the values of the parameters, and >> is the displacement operation.

The fourth formula is as follows:

$$Loss = \Sigma(y(i, j) - (((\alpha_0 x(i, j)^2 + midValue) \gg bitDepth) + (\alpha_1 x(i, j) + \alpha_2 midValue) + \alpha_3 midValue))^2,$$

wherein Loss is the linear minimum mean square error estimation value, bitDepth is the bit depth, midValue is the median value of the bit depth, $y(i, j)$ is the real chroma value of the pixel point at the coordinate (i, j), $x(i, j)$ is the luminance downsampling reconstruction value of the pixel point at the coordinate (i, j), $\alpha_0$, $\alpha_1$, $\alpha_2$ and $\alpha_3$ are the values of the parameters, the value range of the coordinate (i, j) is the value range of the coordinate of the reference pixel point corresponding to the target coding block, and >> is the displacement operation.

Optionally, the ninth processing sub-module includes:
a twelfth processing sub-module configured to determine the third mapping relationship among the error estimation value corresponding to the third formula and the values of the parameters in the third formula through a fifth formula according to the real chroma value and the luminance downsampling reconstruction value of the reference pixel point corresponding to the target coding block.

The third formula is as follows:

$$pred_C(i, j) = ((\alpha_0 x(i, j)^2 + \alpha_1 midValue) \gg bitDepth) + (\alpha_2 \cdot x(i, j) + \alpha_3 \cdot midValue),$$

wherein $pred_C(i, j)$ is the chroma prediction value of the pixel point at the coordinate (i, j), bitDepth is the bit depth, midValue is the median value of the bit depth, $x(i, j)$ is the luminance downsampling reconstruction value of the pixel point at the coordinate (i, j), $\alpha_0$, $\alpha_1$, $\alpha_2$ and $\alpha_3$ are the values of the parameters, and >> is the displacement operation.

The fifth formula is as follows:

$$Loss = \Sigma(y(i, j) - (((\alpha_0 x(i, j)^2 + \alpha_1 midValue) \gg bitDepth) + (\alpha_2 \cdot x(i, j) + \alpha_3 midValue)))^2,$$

wherein Loss is the linear minimum mean square error estimation value, bitDepth is the bit depth, midValue is the median value of the bit depth, $y(i, j)$ is the real chroma value of the pixel point at the coordinate (i, j), $x(i, j)$ is the luminance downsampling reconstruction value of the pixel point at the coordinate (i, j), $\alpha_0$, $\alpha_1$, $\alpha_2$ and $\alpha_3$ are the values of the parameters, the value range of the coordinate (i, j) is the value range of the coordinate of the reference pixel point corresponding to the target coding block, and >> is the displacement operation.

Optionally, the activation function is any one of:

a ReLU function;

a Sigmoid function;

a Tanh function;

a Leaky ReLU function;

an ELU function;

a PReLU function;

a Softmax function;

a Swish function;

a Maxout function; and

a Softplus function.

The coding apparatus provided by the embodiment of the present application can implement various processes implemented by the coding method embodiment described in the second aspect and achieve the same technical effect. In order to avoid repetition, the description thereof will not be repeated here.

The above-mentioned apparatus embodiment is merely illustrative. The units illustrated as separate components may or may not be physically separated, and the components shown as units may or may not be physical units, i.e., may be located in one place, or may also be distributed over a plurality of network units. Some or all of the modules may be selected according to actual needs to achieve the object of the solutions of the embodiments. A person skilled in the art may understand and implement the embodiments without involving any inventive effort.

Various component embodiments of the present disclosure may be implemented in hardware, or in software modules running on one or more processors, or in a combination thereof. A person skilled in the art will appreciate that some or all of the functions of some or all of the components in a computing processing device according to an embodiment of the present disclosure may be implemented in practice using a microprocessor or a digital signal processor (DSP). The present disclosure may also be implemented as device or apparatus programs (such as computer programs and computer program products) configured to perform a part or all of the methods described herein. Such a program implementing the present disclosure may be stored on a computer-readable medium, or may be in the form of one or more signals. Such a signal may be downloaded from an Internet web site, or provided on a carrier signal, or provided in any other form.

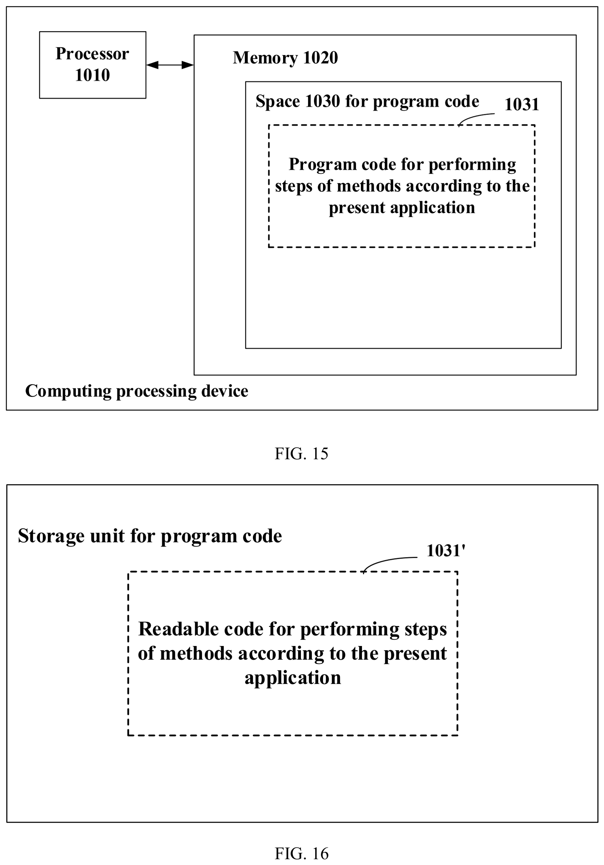

For example, FIG. 15 shows a computing processing device that may implement the method according to the present disclosure. The computing processing device conventionally includes a processor 1010 and a computer program product or a computer readable medium in the form of a memory 1020. The memory 1020 may be an electronic memory such as a flash memory, an electrically erasable programmable read-only memory (EEPROM), an EPROM, a hard disk, or a read-only memory (ROM). The memory 1020 has a storage space 1030 for program code 1031 for performing any step of the methods described above. For example, the storage space 1030 for program code may include respective program code 1031 for implementing various steps in the above methods. The program code may be read from or written to one or more computer program products. These computer program products include a program code carrier such as a hard disk, a compact disk (CD), a memory card, or a floppy disk. Such a computer program product is typically a portable or fixed storage unit as described with reference to FIG. 16. The storage unit may have a memory segment, a memory space, or the like arranged similarly to the memory 1020 in the computing processing device of FIG. 15. For example, the program code may be compressed in a suitable form. In general, the storage unit includes computer-readable code 1031', i.e., code that may be read by, for example, processors such as the processor 1010. When executed by the computing processing device, the code causes the computing processing device to perform various steps in the methods described above.

A decoding device is also provided by the embodiments of the present application, the decoding device includes a processor and a memory. The memory stores a program or an instruction executable on the processor, and the program or the instruction, when executed by the processor, implements various processes in the above-mentioned decoding method embodiment. In addition, the same technical effects may be achieved, and in order to avoid repetition, the description thereof will not be repeated here.

A coding device is also provided by the embodiments of the present application, the coding device includes a processor and a memory. The memory stores a program or an instruction executable on the processor, and the program or the instruction, when executed by the processor, implements various processes in the above-mentioned coding method embodiment. In addition, the same technical effects may be achieved, and in order to avoid repetition, the description thereof will not be repeated here.

A readable storage medium is also provided by the embodiments of the present application, the readable storage medium stores a program or an instruction, the program or the instruction, when executed by a processor, implements various processes in the above-mentioned coding method embodiment or the above-mentioned decoding method embodiment. In addition, the same technical effects may be achieved, and in order to avoid repetition, the description thereof will not be repeated here.

The processor is a processor in the terminal device described in the above-mentioned embodiment. The readable storage medium includes a computer-readable storage medium, such as a computer read-only memory (ROM), a random access memory (RAM), a magnetic disk or an optical disk.

A chip is further provided by the embodiments of the present application, the chip includes a processor and a communication interface. The communication interface is coupled to the processor, and the processor is configured to execute a program or an instruction to implement various processes in the above-mentioned coding method embodiment or the above-mentioned decoding method embodiment. In addition, the same technical effects may be achieved, and in order to avoid repetition, the description thereof will not be repeated here.

It should be understood that the chip mentioned in the embodiments of the present application may also be referred to as a system-on-chip, a system chip, a chip system or a chip-on-a-chip or the like.

A computer program/program product is further provided by the embodiments of the present application. The computer program/program product is stored in a storage medium, the computer program/program product is executed by at least one processor to implement various processes in the above-mentioned coding method embodiment or the above-mentioned decoding method embodiment. In addition, the same technical effects may be achieved, and in order to avoid repetition, the description thereof will not be repeated here.

A coding and decoding system is also provided by the embodiments of the present application, which includes: a coding device and a decoding device. The coding device is configured to perform the steps of the coding method according to the second aspect described above, and the decoding device is configured to perform the steps of the decoding method according to the first aspect described above.

It should be noted that, as used herein, the terms "include", "contain", or any other variation thereof are intended to cover a non-exclusive inclusion, so that a process, method, article, or apparatus that includes a list of elements does not include only those elements but may include other elements not expressly listed or inherent to such process, method, article, or apparatus. An element limited by the phrase "include a ..." does not, without more constraints, preclude the existence of additional identical elements in the process, method, article, or apparatus that includes the element. Furthermore, it should be noted that the methods and apparatuses in the embodiments of the present application are not limited to performing functions in the order shown or discussed. The functions may also be performed in a substantially simultaneous manner or in a reverse order depending on the functions involved. For example, the described methods may be performed in an order different from the described order, and various steps may also be added, omitted, or combined. In addition, features described with reference to certain examples may be combined in other examples.

Through the description of the above embodiments, it can be clear to a person skilled in the art that the methods of the above-mentioned embodiments may be implemented by using software and a necessary general hardware platform, and of course by hardware, but in many cases the former is the preferred embodiment. Based on such an understanding, the technical solution of the present application essentially or in part contributing to the related art may be embodied in the form of a computer software product. The computer software product is stored in a storage medium (such as the ROM/RAM, magnetic disk and optical disk) including several instructions for causing a terminal (which may be a mobile phone, a computer, a server, an air conditioner, or a network device, etc.) to perform the methods according to various embodiments of the present application.

The above description of the embodiments of the present application is made in conjunction with the drawings; however, the present application is not limited to the specific embodiments described above. These specific embodiments are merely illustrative and not restrictive. A person skilled in the art, inspired by the present application, may make various forms without departing from the spirit and scope of the claims protected by the present application, all of which fall within the protection of the present application.

The "one embodiment", "an embodiment" or "one or more embodiments" as used herein means that particular features, structures or characteristics described with reference to an embodiment are included in at least one embodiment of the present disclosure. Moreover, it should be noted that here an example using the wording "in an embodiment" does not necessarily refer to the same embodiment.

The description provided herein describes many concrete details. However, it can be understood that the embodiments of the present disclosure may be implemented without those concrete details. In some of the embodiments, well-known processes, structures and techniques are not described in detail, so as not to affect the understanding of the description.

In the claims, any reference signs between parentheses should not be construed as limiting the claims. The word "include" does not exclude elements or steps that are not listed in the claims. The word "a" or "an" preceding an element does not exclude the existing of a plurality of such elements. The present disclosure may be implemented by means of hardware including several different elements and by means of a properly programmed computer. In unit claims that list several devices, some of those devices may be embodied by the same item of hardware. The words first, second, third and so on do not denote any order. Those words may be interpreted as names.

The embodiments of the present application are described above with reference to the accompanying drawings, but the present application is not limited to the above-mentioned specific embodiments. The above-mentioned embodiments are merely illustrative and not restrictive. A person skilled in the art, inspired by the present application and without departing from the purpose of the present application and the scope of the claims, may also make many forms, all of which fall within the scope of the present application.

**Claims**

1. A decoding method, comprising:

   acquiring coding information corresponding to a target coding block, wherein the coding information at least comprises: index information of a target model, values of parameters, a luminance downsampling reconstruction value of the target coding block and a target difference value;
   determining the target model according to the index information of the target model, wherein the target model is constructed according to an activation function and a first model, and the first model is configured to characterize a mapping relationship between a luminance downsampling reconstruction value and a chroma prediction value;
   determining a chroma prediction value of the target coding block according to the target model, the values of the parameters, and the luminance downsampling reconstruction value of the target coding block; and
   determining a chroma reconstruction value of the target coding block according to the chroma prediction value of the target coding block and the target difference value.

2. The method according to claim 1, **characterized in that** the first model is configured to characterize a non-linear mapping relationship between the luminance downsampling reconstruction value and the chroma prediction value.

3. The method according to claim 2, **characterized in that** the target model is configured to characterize a mapping relationship as follows:

$$pred_C\left(i,j\right)=\alpha_0\cdot\left(\left(rec_L^{'}\left(i,j\right)\right)^2+midValue >> bitDepth\right)+\sigma\left(\alpha_1\cdot rec_L^{'}\left(i,j\right)+\alpha_2\cdot midValue\right)$$
$$+\alpha_3\cdot midValue$$

,

wherein $\sigma(\,)$ is the activation function, bitDepth is a bit depth, midValue is a median value of the bit depth, $pred_C(i,j)$ is a chroma prediction value of a pixel point at a coordinate (i, j), $rec_L^{'}(i,j)$ is a luminance downsampling reconstruction value of the pixel point at the coordinate (i, j), $\alpha_0$, $\alpha_1$, $\alpha_2$ and $\alpha_3$ are the values of the parameters, and >> is a displacement operation.

4. The method according to claim 3, **characterized in that** the values of the parameters in the target model are determined through a first formula according to a real chroma value and a luminance downsampling reconstruction value of a reference pixel point corresponding to the target coding block;
the first formula is as follows:

$$Loss=\sum\left(y\left(i,j\right)-\left(\sigma\left(\left(\alpha_0 x\left(i,j\right)^2+midValue\right) >> bitDepth\right)+\sigma\left(\alpha_1 x\left(i,j\right)+\alpha_2 midValue\right)+\alpha_3 midValue\right)\right)^2,$$

wherein Loss is a linear minimum mean square error estimation value, $\sigma(\,)$ is the activation function, bitDepth is the bit depth, midValue is the median value of the bit depth, $y(i,j)$ is a real chroma value of the pixel point at the coordinate (i, j), $x(i,j)$ is the luminance downsampling reconstruction value of the pixel point at the coordinate (i, j), $\alpha_0$, $\alpha_1$, $\alpha_2$ and $\alpha_3$ are the values of the parameters, a value range of the coordinate (i, j) is a value range of a coordinate of the reference pixel point corresponding to the target coding block, and >> is the displacement operation.

5. The method according to claim 2, **characterized in that** the target model is configured to characterize a mapping relationship as follows:

$$pred_C\left(i,j\right)=\sigma\left(\alpha_0\cdot\left(\left(\left(rec_L^{'}\left(i,j\right)\right)^2+\alpha_1\cdot midValue\right) >> bitDepth\right)+\sigma\left(\alpha_2\cdot rec_L^{'}\left(i,j\right)+\alpha_3\cdot midValue\right)\right),$$

wherein $\sigma(\,)$ is the activation function, bitDepth is a bit depth, midValue is a median value of the bit depth, $pred_C(i,j)$ is a chroma prediction value of a pixel point at a coordinate (i, j), $rec_L^{'}(i,j)$ is a luminance downsampling reconstruction value of the pixel point at the coordinate (i, j), $\alpha_0$, $\alpha_1$, $\alpha_2$ and $\alpha_3$ are the values of the parameters, and >> is a displacement operation.

6. The method according to claim 5, **characterized in that** the values of the parameters in the target model are determined through a second formula according to a real chroma value and a luminance downsampling reconstruction value of a reference pixel point corresponding to the target coding block;
the second formula is as follows:

$$Loss=\sum\left(y\left(i,j\right)-\left(\sigma\left(\alpha_0\left(\left(x\left(i,j\right)^2+\alpha_1 midValue\right) >> bitDepth\right)+\sigma\left(\alpha_2 x\left(i,j\right)+\alpha_3 midValue\right)\right)^2\right)\right),$$

wherein Loss is a linear minimum mean square error estimation value, $\sigma(\,)$ is the activation function, bitDepth is the bit depth, midValue is the median value of the bit depth, $y(i,j)$ is a real chroma value of the pixel point at the coordinate (i, j), $x(i,j)$ is the luminance downsampling reconstruction value of the pixel point at the coordinate (i, j), $\alpha_0$, $\alpha_1$, $\alpha_2$ and $\alpha_3$ are the values of the parameters, a value range of the coordinate (i, j) is a value range of a coordinate of the reference pixel point corresponding to the target coding block, and >> is the displacement operation.

7. The method according to claim 1, **characterized in that** the first model is characterized through a third formula; and the target model is obtained by modifying at least one parameter item in the third formula through the activation function.

8. The method according to claim 7, **characterized in that** the values of the parameters in the target model are determined according to a real chroma value and the luminance downsampling reconstruction value of the target coding block and values of parameters in the third formula; and the values of the parameters in the third formula are determined according to the real chroma value and the luminance downsampling reconstruction value of the target coding block.

9. The method according to claim 8, **characterized in that** the values of the parameters in the target model are determined according to the real chroma value and the luminance downsampling reconstruction value of the target coding block and a value of a target parameter item in the target model; and the value of the target parameter item in the target model is determined through the values of the parameters in the third formula, and the target parameter item is a parameter item modified through the activation function.

10. The method according to claim 9, **characterized in that** the values of the parameters in the target model are determined according to a second mapping relationship, the second mapping relationship is a mapping relationship among an error estimation value corresponding to the target model and the values of the parameters in the target model determined according to the real chroma value and the luminance downsampling reconstruction value of the target coding block and the value of the target parameter item in the target model.

11. The method according to claim 10, **characterized in that** the error estimation value corresponding to the target model is a linear minimum mean square error estimation value.

12. The method according to claim 8, **characterized in that** the values of the parameters in the third formula are determined according to a third mapping relationship, the third mapping relationship is a mapping relationship among an error estimation value corresponding to the third formula and the values of the parameters in the third formula determined according to the real chroma value and the luminance downsampling reconstruction value of the target coding block.

13. The method according to claim 12, **characterized in that** the third mapping relationship is determined through a fourth formula according to a real chroma value and a luminance downsampling reconstruction value of a reference pixel point corresponding to the target coding block;

the third formula is as follows:

$$pred_C(i, j) = (\alpha_0 x(i, j))^2 + midValue \gg bitDepth) + (\alpha_1 x(i, j)) + \alpha_2 midValue) + \alpha_3 midValue,$$

wherein $pred_C(i, j)$ is a chroma prediction value of a pixel point at a coordinate (i, j), bitDepth is a bit depth, midValue is a median value of the bit depth, $x(i, j)$ is a luminance downsampling reconstruction value of the pixel point at the coordinate (i, j), $\alpha_0$, $\alpha_1$, $\alpha_2$ and $\alpha_3$ are the values of the parameters, and >> is a displacement operation;
the fourth formula is as follows:

$$Loss = \Sigma(y(i, j) - (((\alpha_0 x(i, j)^2 + midValue) >> bitDepth) + (\alpha_1 x(i, j) + \alpha_2 midValue) + \alpha_3 midValue))^2,$$

wherein Loss is a linear minimum mean square error estimation value, bitDepth is the bit depth, midValue is the median value of the bit depth, $y(i, j)$ is a real chroma value of the pixel point at the coordinate (i, j), $x(i, j)$ is the luminance downsampling reconstruction value of the pixel point at the coordinate (i, j), $\alpha_0$, $\alpha_1$, $\alpha_2$ and $\alpha_3$ are the values of the parameters, a value range of the coordinate (i, j) is a value range of a coordinate of the reference pixel point corresponding to the target coding block, and >> is the displacement operation.

14. The method according to claim 12, **characterized in that** the third mapping relationship is determined through a fifth formula according to a real chroma value and a luminance downsampling reconstruction value of a reference pixel point corresponding to the target coding block;

the third formula is as follows:

$$pred_C(i, j) = ((\alpha_0 x(i, j)^2 + \alpha_1 midValue) \gg bitDepth) + (\alpha_2 \cdot x(i, j) + \alpha_3 \cdot midValue),$$

wherein $pred_C(i, j)$ is a chroma prediction value of a pixel point at a coordinate (i, j), bitDepth is a bit depth, midValue is a median value of the bit depth, $x(i, j)$ is a luminance downsampling reconstruction value of the pixel point at the

coordinate (i, j), $\alpha_0$, $\alpha_1$, $\alpha_2$, and $\alpha_3$ are the values of the parameters, and >> is a displacement operation; the fifth formula is as follows:

Loss = $\Sigma(y(i, j) - (((\alpha_0 x(i, j)^2 + \alpha_1 midValue) >> bitDepth) + (\alpha_2 \cdot x(i, j) + \alpha_3 midValue)))^2$,

wherein Loss is a linear minimum mean square error estimation value, bitDepth is the bit depth, midValue is the median value of the bit depth, $y(i, j)$ is a real chroma value of the pixel point at the coordinate (i, j), $x(i, j)$ is the luminance downsampling reconstruction value of the pixel point at the coordinate (i, j), $\alpha_0$, $\alpha_1$, $\alpha_2$ and $\alpha_3$ are the values of the parameters, a value range of the coordinate (i, j) is a value range of a coordinate of the reference pixel point corresponding to the target coding block, and >> is the displacement operation.

15. The method according to any one of claims 1 to 14, **characterized in that** the activation function is any one of:

    a ReLU function;
    a Sigmoid function;
    a Tanh function;
    a Leaky ReLU function;
    an ELU function;
    a PReLU function;
    a Softmax function;
    a Swish function;
    a Maxout function; and
    a Softplus function.

16. A coding method, comprising:

    constructing a target model according to an activation function and a first model, wherein the first model is configured to characterize a mapping relationship between a luminance downsampling reconstruction value and a chroma prediction value;
    determining values of parameters in the target model according to a real chroma value and a luminance downsampling reconstruction value of a target coding block;
    determining a chroma prediction value of the target coding block according to the target model, the values of the parameters and the luminance downsampling reconstruction value of the target coding block;
    determining a target difference value according to the chroma prediction value of the target coding block and the real chroma value of the target coding block; and
    generating coding information corresponding to the target coding block according to index information of the target model, values of variable parameters, the luminance downsampling reconstruction value of the target coding block and the target difference value.

17. The method according to claim 16, **characterized in that** the first model is configured to characterize a non-linear mapping relationship between the luminance downsampling reconstruction value and the chroma prediction value.

18. The method according to claim 17, **characterized in that** the target model is configured to characterize a mapping relationship as follows:

$$pred_C(i, j) = \alpha_0 \cdot \left( \left( rec_L^{'}(i, j) \right)^2 + midValue >> bitDepth \right) + \sigma\left( \alpha_1 \cdot rec_L^{'}(i, j) + \alpha_2 \cdot midValue \right) + \alpha_3 \cdot midValue$$

,
wherein $\sigma(\ )$ is the activation function, bitDepth is a bit depth, midValue is a median value of the bit depth, $pred_C(i, j)$ is a chroma prediction value of a pixel point at a coordinate (i, j), $rec_L^{'}(i, j)$ is a luminance downsampling reconstruction value of the pixel point at the coordinate (i, j), $\alpha_0$, $\alpha_1$, $\alpha_2$ and $\alpha_3$ are the values of the parameters, and >> is a displacement operation.

19. The method according to claim 18, **characterized in that** the step of determining the values of the parameters in the target model according to the real chroma value and the luminance downsampling reconstruction value of the target coding block comprises:

determining the values of the parameters in the target model through a first formula according to a real chroma value and a luminance downsampling reconstruction value of a reference pixel point corresponding to the target coding block;
the first formula is as follows:

$$Loss = \sum \left( y(i,j) - \left( \sigma \left( \left( \alpha_0 x(i,j)^2 + midValue \right) >> bitDepth \right) + \sigma \left( \alpha_1 x(i,j) + \alpha_2 midValue \right) + \alpha_3 midValue \right) \right)^2,$$

wherein Loss is a linear minimum mean square error estimation value, $\sigma(\,)$ is the activation function, bitDepth is the bit depth, midValue is the median value of the bit depth, $y(i, j)$ is a real chroma value of the pixel point at the coordinate (i, j), $x(i, j)$ is the luminance downsampling reconstruction value of the pixel point at the coordinate (i, j), $\alpha_0$, $\alpha_1$, $\alpha_2$ and $\alpha_3$ are the values of the parameters, a value range of the coordinate (i, j) is a value range of a coordinate of the reference pixel point corresponding to the target coding block, and >> is the displacement operation.

20. The method according to claim 17, **characterized in that** the target model is configured to characterize a mapping relationship as follows:

$$pred_C(i,j) = \sigma \left( \alpha_0 \cdot \left( \left( \left( rec_L^{'}(i,j) \right)^2 + \alpha_1 \cdot midValue \right) >> bitDepth \right) + \sigma \left( \alpha_2 \cdot rec_L^{'}(i,j) + \alpha_3 \cdot midValue \right) \right),$$

wherein $\sigma(\,)$ is the activation function, bitDepth is a bit depth, midValue is a median value of the bit depth, $pred_C(i, j)$ is a chroma prediction value of a pixel point at a coordinate (i, j), $rec_L^{'}(i,j)$ is a luminance downsampling reconstruction value of the pixel point at the coordinate (i, j), $\alpha_0$, $\alpha_1$, $\alpha_2$ and $\alpha_3$ are the values of the parameters, and >> is a displacement operation.

21. The method according to claim 20, **characterized in that** the step of determining the values of the parameters in the target model according to the real chroma value and the luminance downsampling reconstruction value of the target coding block comprises:

determining the values of the parameters in the target model through a second formula according to a real chroma value and a luminance downsampling reconstruction value of a reference pixel point corresponding to the target coding block;
the second formula is as follows:

$$Loss = \sum \left( y(i,j) - \left( \sigma \left( \alpha_0 \left( \left( x(i,j)^2 + \alpha_1 midValue \right) >> bitDepth \right) + \sigma \left( \alpha_2 x(i,j) + \alpha_3 midValue \right) \right)^2 \right) \right)$$

,
wherein Loss is a linear minimum mean square error estimation value, $\sigma(\,)$ is the activation function, bitDepth is the bit depth, midValue is the median value of the bit depth, $y(i, j)$ is a real chroma value of the pixel point at the coordinate (i, j), $x(i, j)$ is a luminance downsampling reconstruction value of the pixel point at the coordinate (i, j), $\alpha_0$, $\alpha_1$, $\alpha_2$ and $\alpha_3$ are the values of the parameters, a value range of the coordinate (i, j) is a value range of a coordinate of the reference pixel point corresponding to the target coding block, and >> is the displacement operation.

22. The method according to claim 16, **characterized in that** the first model is characterized through a third formula; and the step of constructing the target model according to the activation function and the first model comprises:
modifying at least one parameter item in the third formula through the activation function to obtain the target model.

23. The method according to claim 22, **characterized in that** the step of determining the values of the parameters in the target model according to the real chroma value and the luminance downsampling reconstruction value of the target coding block comprises:

> determining values of parameters in the third formula according to the real chroma value and the luminance downsampling reconstruction value of the target coding block; and
> determining the values of the parameters in the target model according to the real chroma value and the luminance downsampling reconstruction value of the target coding block and the values of the parameters in the third formula.

**24.** The method according to claim 23, **characterized in that** the step of determining the values of the parameters in the target model according to the real chroma value and the luminance downsampling reconstruction value of the target coding block and the values of the parameters in the third formula comprises:

> determining a value of a target parameter item in the target model through the values of the parameters in the third formula, wherein the target parameter item is a parameter item modified through the activation function; and
> determining the values of the parameters in the target model according to the real chroma value and the luminance downsampling reconstruction value of the target coding block and the value of the target parameter item in the target model.

**25.** The method according to claim 24, **characterized in that** the step of determining the values of the parameters in the target model according to the real chroma value and the luminance downsampling reconstruction value of the target coding block and the value of the target parameter item in the target model comprises:

> determining a second mapping relationship among an error estimation value corresponding to the target model and the values of the parameters in the target model according to the real chroma value and the luminance downsampling reconstruction value of the target coding block and the value of the target parameter item in the target model; and
> determining the values of the parameters in the target model according to the second mapping relationship.

**26.** The method according to claim 25, **characterized in that** the error estimation value corresponding to the target model is a linear minimum mean square error estimation value.

**27.** The method according to claim 23, **characterized in that** the step of determining the values of the parameters in the third formula according to the real chroma value and the luminance downsampling reconstruction value of the target coding block comprises:

> determining a third mapping relationship among an error estimation value corresponding to the third formula and the values of the parameters in the third formula according to the real chroma value and the luminance downsampling reconstruction value of the target coding block; and
> determining the values of the parameters in the third formula according to the third mapping relationship.

**28.** The method according to claim 27, **characterized in that** the step of determining the third mapping relationship among the error estimation value corresponding to the third formula and the values of the parameters in the third formula according to the real chroma value and the luminance downsampling reconstruction value of the target coding block comprises:

> determining the third mapping relationship among the error estimation value corresponding to the third formula and the values of the parameters in the third formula through a fourth formula according to a real chroma value and a luminance downsampling reconstruction value of a reference pixel point corresponding to the target coding block;
> the third formula is as follows:
>
> $$pred_C(i, j) = (\alpha_0 x(i, j))^2 + midValue) \gg bitDepth) + (\alpha_1 x(i, j)) + \alpha_2 midValue) + a_3 midValue,$$
>
> wherein $pred_C(i, j)$ is a chroma prediction value of a pixel point at a coordinate (i, j), bitDepth is a bit depth, midValue is a median value of the bit depth, $x(i, j)$ is a luminance downsampling reconstruction value of the pixel point at the coordinate (i, j), $\alpha_0$, $\alpha_1$, $\alpha_2$ and $\alpha_3$ are the values of the parameters, and >> is a displacement operation;
> the fourth formula is as follows:

Loss = $\Sigma(y(i, j) - (((\alpha_0x(i, j)^2 + midValue) >> bitDepth) + (\alpha_1x(i, j) + \alpha_2midValue) + \alpha_3midValue))^2$,

wherein Loss is a linear minimum mean square error estimation value, bitDepth is the bit depth, midValue is the median value of the bit depth, $y(i, j)$ is a real chroma value of the pixel point at the coordinate (i, j), $x(i, j)$ is the luminance downsampling reconstruction value of the pixel point at the coordinate (i, j), $\alpha_0$, $\alpha_1$, $\alpha_2$ and $\alpha_3$ are the values of the parameters, a value range of the coordinate (i, j) is a value range of a coordinate of the reference pixel point corresponding to the target coding block, and >> is the displacement operation.

29. The method according to claim 27, **characterized in that** the step of determining the third mapping relationship among the error estimation value corresponding to the third formula and the values of the parameters in the third formula according to the real chroma value and the luminance downsampling reconstruction value of the target coding block comprises:

determining the third mapping relationship among the error estimation value corresponding to the third formula and the values of the parameters in the third formula through a fifth formula according to a real chroma value and a luminance downsampling reconstruction value of a reference pixel point corresponding to the target coding block; the third formula is as follows:

$pred_C(i, j) = ((\alpha_0x(i, j)^2 + \alpha_1midValue) \gg bitDepth) + (\alpha_2 \cdot x(i, j) + \alpha_3 \cdot midValue)$,

wherein $pred_C(i, j)$ is a chroma prediction value of a pixel point at a coordinate (i, j), bitDepth is a bit depth, midValue is a median value of the bit depth, $x(i, j)$ is a luminance downsampling reconstruction value of the pixel point at the coordinate (i, j), $\alpha_0$, $\alpha_1$, $\alpha_2$ and $\alpha_3$ are the values of the parameters, and >> is a displacement operation; the fifth formula is as follows:

Loss = $\Sigma(y(i, j) - (((\alpha_0x(i, j)^2 + \alpha_1midValue) >> bitDepth) + (\alpha_2 \cdot x(i, j) + \alpha_3midValue)))^2$,

wherein Loss is a linear minimum mean square error estimation value, bitDepth is the bit depth, midValue is the median value of the bit depth, $y(i, j)$ is a real chroma value of the pixel point at the coordinate (i, j), $x(i, j)$ is the luminance downsampling reconstruction value of the pixel point at the coordinate (i, j), $\alpha_0$, $\alpha_1$, $\alpha_2$ and $\alpha_3$ are the values of the parameters, a value range of the coordinate (i, j) is a value range of a coordinate of the reference pixel point corresponding to the target coding block, and >> is the displacement operation.

30. The method according to any one of claims 16 to 29, **characterized in that** the activation function is any one of:

a ReLU function;
a Sigmoid function;
a Tanh function;
a Leaky ReLU function;
an ELU function;
a PReLU function;
a Softmax function;
a Swish function;
a Maxout function; and
a Softplus function.

31. A decoding apparatus, comprising:

an information acquisition module configured to acquire coding information corresponding to a target coding block and a luminance downsampling reconstruction value of the target coding block, wherein the coding information at least comprises: index information of a target model, values of parameters, the luminance downsampling reconstruction value of the target coding block and a target difference value;
a model determination module configured to determine the target model according to the index information of the target model, wherein the target model is constructed according to an activation function and a first model, and the first model is configured to characterize a mapping relationship between a luminance downsampling reconstruction value and a chroma prediction value;
a chroma prediction module configured to determine a chroma prediction value of the target coding block according to the target model, the values of the parameters, and the luminance downsampling reconstruction value of the target coding block; and
a chroma reconstruction module configured to determine a chroma reconstruction value of the target coding block according to the chroma prediction value of the target coding block and the target difference value.

32. A coding apparatus, comprising:

a first construction module configured to construct a target model according to an activation function and a first model, wherein the first model is configured to characterize a mapping relationship between a luminance downsampling reconstruction value and a chroma prediction value;
a first processing module configured to determine values of parameters in the target model according to a real chroma value and a luminance downsampling reconstruction value of a target coding block;
a second processing module configured to determine a chroma prediction value of the target coding block according to the target model, the values of the parameters and the luminance downsampling reconstruction value of the target coding block;
a third processing module configured to determine a target difference value according to the chroma prediction value of the target coding block and the real chroma value of the target coding block; and
a first generation module configured to generate coding information corresponding to the target coding block according to index information of the target model, values of variable parameters, the luminance downsampling reconstruction value of the target coding block and the target difference value.

33. A decoding device, comprising a processor and a memory; wherein the memory stores a program or an instruction executable on the processor, and the program or the instruction, when executed by the processor, implements the steps of the decoding method according to any one of claims 1 to 15.

34. A coding device, comprising a processor and a memory; wherein the memory stores a program or an instruction executable on the processor, and the program or the instruction, when executed by the processor, implements the steps of the coding method according to any one of claims 16 to 30.

35. A computing processing device, comprising:

a memory storing a computer-readable code; and
one or more processors, wherein when the computer-readable code is executed by the one or more processors, the computing processing device performs the decoding method according to any one of claims 1 to 15 or performing the coding method according to any one of claims 16 to 30.

36. A computer program, comprising a computer-readable code, **characterized in that** when the computer-readable code runs on a computing processing device, the computer-readable code causes the computing processing device to perform the decoding method according to any one of claims 1 to 15 or to perform the coding method according to any one of claims 16 to 30.

37. A computer-readable medium having stored thereon the computer program according to claim 36.

$Rec'_L$

Luminance

2N

2N

FIG. 1

$Rec_C$

Chroma

N

N

FIG. 2

Chroma

Luminance

FIG. 3

FIG. 4

FIG. 5

FIG. 6

| 1 | 0 | -1 |
|---|---|----|
| 1 | 0 | -1 |

FIG. 7

| 1 | 2 | 1 |
|----|----|----|
| -1 | -2 | -1 |

FIG. 8

| 2 | 1 | -1 |
|---|----|----|
| 1 | -1 | -2 |

FIG. 9

| -1 | 1 | 2 |
|----|----|---|
| -2 | -1 | 1 |

FIG. 10

Acquiring coding information corresponding to a target coding block, wherein the coding information at least includes: index information of a target model, values of parameters, a luminance downsampling reconstruction value of the target coding block and a target difference value — S101

Determining the target model according to the index information of the target model — S102

Determining a chroma prediction value of the target coding block according to the target model, the values of the parameters and the luminance downsampling reconstruction value of the target coding block — S103

Determining a chroma reconstruction value of the target coding block according to the chroma prediction value of the target coding block and the target difference value — S104

FIG. 11

Constructing a target model according to an activation function and a first model, wherein the first model is configured to characterize a mapping relationship between a luminance downsampling reconstruction value and a chroma prediction value — S201

Determining values of parameters in the target model according to a real chroma value and a luminance downsampling reconstruction value of a target coding block — S202

Determining a chroma prediction value of the target coding block according to the target model, the values of the parameters and the luminance downsampling reconstruction value of the target coding block — S203

Determining a target difference value according to the chroma prediction value of the target coding block and the real chroma value of the target coding block — S204

Genera ting coding in formation corresponding to the target coding block according to index information of the target model, values of variable parameters, the luminance downsampling reconstruction value of the target coding block and the target difference value — S205

FIG. 12

100

Decoding apparatus

Information acquisition module — 101

Model determination module — 102

Chroma prediction module — 103

Chroma reconstruction module — 104

FIG. 13

200

Coding apparatus

First construction module — 201

First processing module — 202

Second processing module — 203

Third processing module — 204

First generation module — 205

FIG. 14

FIG. 15

FIG. 16

## INTERNATIONAL SEARCH REPORT

| International application No. |
|---|
| **PCT/CN2024/086304** |

| A. | CLASSIFICATION OF SUBJECT MATTER |
|---|---|

H04N 19/186(2014.01)i

According to International Patent Classification (IPC) or to both national classification and IPC

| B. | FIELDS SEARCHED |
|---|---|

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNABS; CNTXT; DWPI; VEN; USTXT; WOTXT; EPTXT; JPTXT; CNKI; IEEE: 亮度, 色度, 预测, 重建, 重构, 编码, 解码, CCLM, 跨分支, 跨分量, 交叉分量, 交叉分支, 分量间, 激活, 差值, 残差, 偏差, 误差, 非线性, hue, chroma, chrominance, brightness, luminance, luminosity, intensity, illumination, rebuild, reconstruct, predict, activate, non-linear

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | US 2023041999 A1 (OFINNO, LLC) 09 February 2023 (2023-02-09)<br>description, paragraphs [0034]-[0150], and figures 1-22 | 1-12, 15-27, 30-37 |
| Y | US 2021084290 A1 (ELECTRONICS & TELECOMMUNICATIONS RESEARCH INSTITUTE) 18 March 2021 (2021-03-18)<br>description, paragraphs [0185]-[0721], and figures 1-28 | 1-12, 15-27, 30-37 |
| A | CN 115190312 A (XIDIAN UNIVERSITY) 14 October 2022 (2022-10-14)<br>entire document | 1-37 |
| A | CN 113992913 A (KANGDA INTERCONTINENTAL MEDICAL EQUIPMENT CO., LTD.) 28 January 2022 (2022-01-28)<br>entire document | 1-37 |
| A | CN 113365067 A (SUN YAT-SEN UNIVERSITY) 07 September 2021 (2021-09-07)<br>entire document | 1-37 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 June 2024** | **19 June 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/086304**

| Patent document cited in search report | | | Publication date (day/month/year) | Patent family member(s) | | | Publication date (day/month/year) |
|---|---|---|---|---|---|---|---|
| US | 2023041999 | A1 | 09 February 2023 | None | | | |
| US | 2021084290 | A1 | 18 March 2021 | KR | 20210068374 | A | 09 June 2021 |
| | | | | US | 11166014 | B2 | 02 November 2021 |
| | | | | KR | 20190071611 | A | 24 June 2019 |
| | | | | KR | 102262554 | B1 | 09 June 2021 |
| | | | | KR | 20230018505 | A | 07 February 2023 |
| CN | 115190312 | A | 14 October 2022 | CN | 115190312 | B | 07 June 2024 |
| CN | 113992913 | A | 28 January 2022 | CN | 113992913 | B | 17 May 2022 |
| CN | 113365067 | A | 07 September 2021 | CN | 113365067 | B | 14 March 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310390826